(19) Europäisches Patentamt
European Patent Office
Office européen des brevets

(11) EP 4 708 897 A1

(12) # EUROPEAN PATENT APPLICATION

(43) Date of publication:
**11.03.2026 Bulletin 2026/11**

(21) Application number: **25198509.9**

(22) Date of filing: **27.08.2025**

(51) International Patent Classification (IPC):
***H04N 23/90*** *(2023.01)* ***H04N 23/69*** *(2023.01)*
***H04N 23/695*** *(2023.01)* ***H04N 23/61*** *(2023.01)*
***H04N 23/661*** *(2023.01)* ***H04N 23/58*** *(2023.01)*
***G08B 13/196*** *(2006.01)*

(52) Cooperative Patent Classification (CPC):
**H04N 23/90; G08B 13/19643; H04N 23/58; H04N 23/61; H04N 23/661; H04N 23/69; H04N 23/695**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.09.2024 JP 2024153509**
**05.02.2025 JP 2025017551**

(71) Applicant: **Canon Kabushiki Kaisha**
**Tokyo, 146-8501 (JP)**

(72) Inventors:
- **YAMAGISHI, Masaharu**
  **Tokyo, 146-8501 (JP)**
- **MATSUOKA, Asuka**
  **Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **IMAGE-CAPTURING CONTROL APPARATUS, IMAGE-CAPTURING CONTROL METHOD, IMAGE CAPTURING SYSTEM, COMPUTER PROGRAM, AND STORAGE MEDIUM**

(57) An image-capturing control apparatus (100) includes at least one processor and/or circuit configured to function as following units: an acquisition unit (101) configured to acquire information from a state of a main camera (500) and/or from a video captured by the main camera; and a control unit (101) configured to control an operation of a sub camera (400) among the cameras based on a role assigned to the sub camera and the information, wherein the acquisition unit acquires, as the information, information on an angle of view of the main camera, information on a distance between the main camera and a target subject of the main camera, and information on a distance between the sub camera and a tracking target of the sub camera, and wherein the control unit controls an angle of view of the sub camera based on the role assigned to the sub camera and the information.

FIG. 1

500
300
400
MAIN CAMERA
BIRD'S-EYE CAMERA
SUB CAMERA
10
700
100
600
IMAGE-CAPTURING CONTROL APPARATUS
ROLE CONTROL APPARATUS

EP 4 708 897 A1

## Description

TECHNICAL FIELD

The present disclosure relates to an image-capturing control apparatus, an image-capturing control method, an image capturing system, a computer program, and a computer-readable storage medium.

BACKGROUND

Japanese Patent Laid-Open Publication No. 2020-25248 discloses an image capturing system in which a plurality of cameras is divided into a main camera and a sub camera, and the sub camera is controlled so as to capture the same subject as that captured by the main camera. The image capturing system disclosed in Japanese Patent Laid-Open Publication No. 2020-25248 is capable of automatic control of image capturing by the sub camera, thereby achieving labor saving.

It is assumed that the image capturing system as disclosed in Japanese Patent Laid-Open Publication No. 2020-25248 may control the angle of view of the sub camera in coordination with zoom control by the main camera. However, even if the user intends to capture the subject with the main camera and the sub camera at the same angle of view, the sub camera may capture the subject at an unintended angle of view.

SUMMARY

The present disclosure is directed to an image-capturing control apparatus and an image-capturing control method configured to enable a sub camera to perform image capturing at an intended angle of view, when automatically controlling image capturing by the sub camera in coordination with a main camera.

The present disclosure in its first aspect provides an image-capturing control apparatus as specified in claim 1. Optional features are specified in claims 2 to 11. The optional features of the first aspect are also optional features of the other aspects.

The present disclosure in its second aspect provides an image capturing system as specified in claim 12.

The present disclosure in its third aspect provides an image-capturing control method as specified in claim 13.

The present disclosure in its fourth aspect provides a computer program as specified in claim 14.

The present disclosure in its fifth aspect provides a computer-readable storage medium as specified in claim 15.

Features of the present disclosure will become apparent from the following description of embodiments with reference to the attached drawings. The following description of embodiments is described by way of example.

BRIEF DESCRIPTION OF THE DRAWINGS

Fig. 1 is a schematic diagram illustrating an image capturing system according to a first embodiment of the present disclosure.

Fig. 2 is a block diagram illustrating examples the functional configurations of apparatuses constituting the image capturing system according to the first embodiment.

Fig. 3 is a diagram illustrating an image-capturing control apparatus according to an embodiment, focusing on the main operations and signal flow.

Fig. 4 is a diagram illustrating examples of roles assignable to a sub camera and control details according to an embodiment.

Fig. 5 is a flowchart for a role determination process according to the first embodiment.

Figs. 6A, 6B, 6C, and 6D are flowcharts for the respective operations of the apparatuses of an image-capturing system according to an embodiment.

Figs. 7A and 7B are diagrams illustrating coordinate conversion according to an embodiment.

Figs. 8A and 8B are diagrams regarding subject detection and coordinate conversion according to an embodiment.

Figs. 9A, 9B, and 9C are schematic diagrams illustrating control of the operation of a sub camera according to the first embodiment.

Figs. 10A, 10B, and 10C are schematic diagrams illustrating another control of the operation of the sub camera according to the first embodiment.

Fig. 11 is a diagram illustrating calculation of a pan angle according to an embodiment.

Fig. 12 is a diagram illustrating calculation of a tilt angle according to an embodiment.

Figs. 13A, 13B, and 13C are diagrams illustrating examples of mapping of zoom control values of a main camera and a zoom camera according to the first embodiment.

Fig. 14 is a flowchart for a process of determining control details corresponding to the role of the sub camera according to the first embodiment.

Figs. 15A and 15B are schematic diagrams illustrating control corresponding to the role of the sub camera according to the first embodiment.

Fig. 16 is a schematic diagram illustrating control corresponding to the role of the sub camera according to the first embodiment.

Fig. 17 is a schematic diagram illustrating an operation for tracking a plurality of subjects in a modification of the first embodiment.

Fig. 18 is a schematic diagram illustrating an image capturing system according to a second embodiment of the present disclosure.

Fig. 19 is a diagram illustrating examples of assignable roles and control details according to the second embodiment.

Figs. 20A and 20B are schematic diagrams illustrating examples of control of the tracking target of sub cameras according to the second embodiment.

Figs. 21A and 21B are diagrams illustrating the positional relationship among the main camera, the sub camera, and the subjects.

Figs. 22A and 22B are diagrams illustrating the angles of view of the main camera and the sub camera.

DESCRIPTION OF THE EMBODIMENTS

Embodiments of the present disclosure will be described in detail hereinbelow with reference to the accompanying drawings.

It is to be understood that the following embodiments do not limit the disclosure according to the scope of the claims. Although the embodiments describe a plurality of features, not all of them are absolutely necessary. In the accompanying drawings, like or similar components are given like reference signs, and duplicated descriptions are omitted.

First Embodiment

Outline of Multi-Camera Image Capturing System

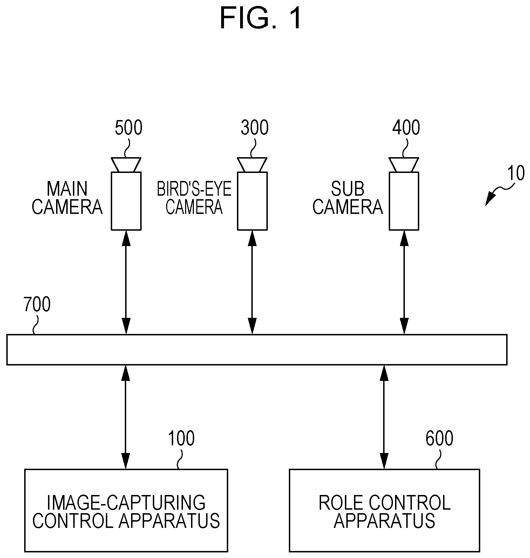

Fig. 1 is a schematic diagram illustrating, in outline, the configuration of a multi-camera image capturing system 10 according to this embodiment (hereinafter simply referred to as "image capturing system". The image capturing system 10 includes a plurality of cameras 300, 400, and 500, an image-capturing control apparatus 100, and a role control apparatus 600. The plurality of cameras 300, 400, and 500, the image-capturing control apparatus 100, and the role control apparatus 600 are connected so as to be capable of communication via a communication network 700.

The communication network 700 conforms to the IEEE802.3 series, the 1EEE802.11 series, or any known wired or wireless communication standard. Each of the plurality of cameras 300, 400, and 500, the image-capturing control apparatus 100, and the role control apparatus 600 includes a communication interface conforming to the standard of the communication network 700.

Among the plurality of cameras 300, 400, and 500, the camera 300 captures an entire predetermined image capture range. The image capture range is set, for example, in a studio, as an area in which the subject to be captured can be present. For this reason, an image captured by the camera 300 includes all of the subjects within the image capture range.

The camera 300 is intended to capture an image for detecting subjects to be captured that are present within the image capture range. Accordingly, the direction and the angle of view of the camera 300 depend on the position of the camera 300 and are basically fixed during image capturing. The camera 300 preferably captures the entire image capture range without being hidden by an object outside the image capture range. For this reason, here, the camera 300 is provided at a position at which the entire image capture range can be overlooked. The camera 300 is hereinafter referred to as a bird's-eye camera to be distinguished from the other cameras 400 and 500 whose image capturing directions and angles of view are not basically fixed. However, the installation position of the camera 300 is not limited to the position at which the image capture range can be overlooked. The operation of the bird's-eye camera 300 can be controlled by the image-capturing control apparatus 100.

The cameras 400 and 500 are, for example, pan-tilt-zoom (PTZ) cameras, and their operations including the image capturing direction (pan and tilt angles) and the angle of view (zooming) can be controlled from an external device. Here, the operation of the camera 500 is controlled by the user of the image capturing system, and the operation of the camera 400 is controlled by the image-capturing control apparatus 100. Since the image-capturing control apparatus 100 controls the operation of the camera 400 based on the state of the camera 500, the camera 500 is hereinafter referred to as a main camera, and the camera 400 is referred to as a sub camera. Although only one sub camera 400 is illustrated for ease of explanation and understanding, the number of sub cameras may be two or more. The main camera 500 may be directly operated by the user. The cameras 400 and 500 may be configured such that the image capturing direction (pan and tilt angles) can be controlled by mounting the camera body on a camera platform. The cameras 400 and 500 may be configured such that an interchangeable zoom lens is mounted on the camera body.

In this embodiment, the role control apparatus 600 may be operated by an operator. The image-capturing control apparatus 100 may also be operated by an operator (user), but the presence of the operator is not essential. The operator of the role control apparatus 600 may also serve as the user of the image-capturing control apparatus 100. Since image capturing by the bird's-eye camera 300 and the sub camera 400 is controlled by the image-capturing control apparatus 100, no cameraman is required. The main camera 500 is operated by an operator or a cameraman. The configuration that requires no operator or cameraman for some apparatuses in this manner allows labor saving.

Although Fig. 1 illustrates that all signals are transmitted via the communication network 700, for example, video signals and control signals may be transmitted by different methods. For example, the plurality of cameras 300, 400, and 500 may individually directly supply a video signal to the image-capturing control apparatus 100 by cable. The camera 300, 400, and 500 and the image-capturing control apparatus 100 include a communication circuit conforming to the standard of the video signal. Examples of the standard of the video signal include, but are not limited to, the serial digital interface (SDI) standard and the high-definition multimedia interface (HDMI)®.

The image-capturing control apparatus 100 detects a subject from a video signal received from the bird's-eye camera 300. The image-capturing control apparatus 100 determines the image capturing direction and the angle of view of the sub camera 400 based on the subject detection result, the state of the main camera 500, and a role assigned to the sub camera 400. The image-capturing control apparatus 100 transmits a control command including the determined image capturing direction and angle of view to the sub camera 400. By changing the setting of the role, the method for determining the image capturing direction and the angle of view of the sub camera 400 can be changed, thereby increasing the flexibility in controlling the operation of the sub camera 400.

Examples of Functional Configurations of Apparatuses

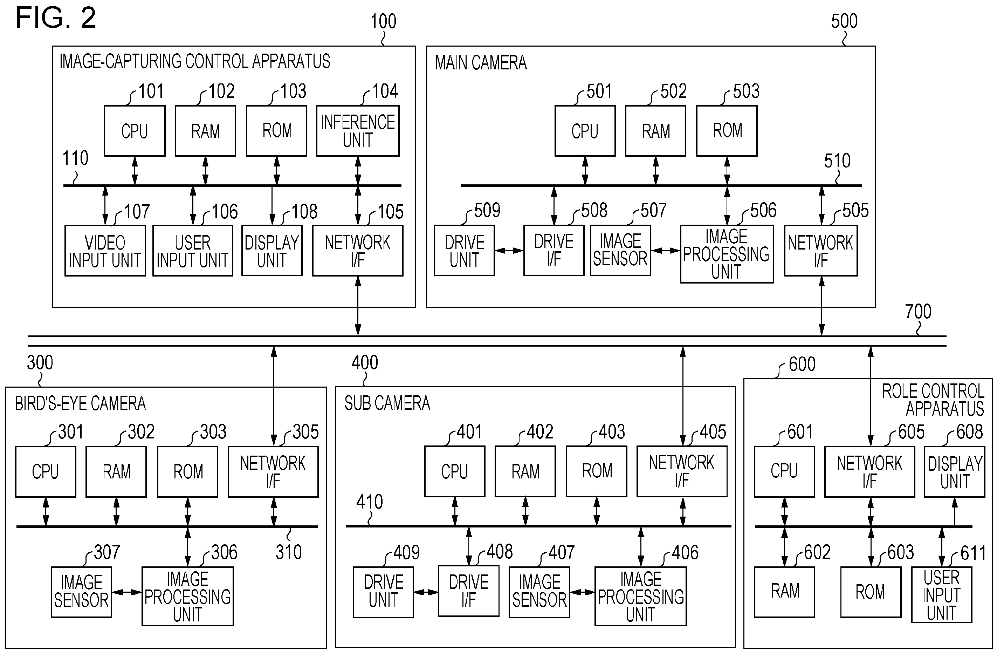

Fig. 2 is a block diagram illustrating examples of the functional configurations of the apparatuses constituting the multi-camera image capturing system 10 illustrated in Fig. 1. Each of the configurations represented as functional blocks in the drawing can be implemented by an integrated circuit, such as an application specific integrated circuit (ASIC) or a field-programmable gate array (FPGA), a discrete circuit, or a combination of a memory and a processor that executes programs stored in the memory. One functional block may be implemented by a plurality of integrated circuit packages, or a plurality of functional blocks may be implemented by one integrated circuit package. An identical functional block may be implemented by different configurations depending on its operating environment or a required performance.

Image-Capturing Control Apparatus 100

First, an example of the functional configuration of the image-capturing control apparatus 100 will be described. The image-capturing control apparatus 100 may be a general-purpose computer, such as a personal computer or a workstation. The image-capturing control apparatus 100 is configured such that a central processing unit (CPU) 101, a random-access memory (RAM) 102, a read-only memory (ROM) 103, an inference unit 104, a network interface (I/F) 105, a user input unit 106, and a display unit 108 are mutually connected via an internal bus 110.

The CPU 101 is a microprocessor capable of executing programmed instructions. The CPU 101 implements the functions of the image-capturing control apparatus 100 (described later) by reading programs stored in the ROM 103 into the RAM 102 and executing them. The CPU 101 can implement the functions of the image-capturing control apparatus 100 by executing an image-capturing control application operating on its operating system (OS).

The RAM 102 is used to load programs to be executed by the CPU 101 and to temporarily store data to be processed or being processed by the CPU 101. Part of the RAM 102 may also be used as a video memory of the display unit 108.

The ROM 103 is a rewritable non-volatile memory and stores programs to be executed by the CPU 101 (OS and applications), user data, and so on.

The inference unit 104 executes a subject region detection process using a machine-learned model on an image captured by the bird's-eye camera 300. The inference unit 104 can be implemented by a hardware circuit capable of high-speed operation of a machine-learned model, such as a graphics processing unit (GPU) or a neural network processing unit (NPU). Alternatively, the inference unit 104 may be implemented by a reconfigurable logic circuit, such as an FPGA. The CPU 101 may implement the function of the inference unit 104 by executing a program.

The machine-learned model may be a convolutional neural network (CNN) trained according to the type of the subject to be detected. Here, the inference unit 104 detects a human body region or a human face region from an input image as a subject region. The inference unit 104 outputs, for each detected subject region, the position, size, and detection reliability of a rectangular region circumscribing each subject region. Detection processes for different types of subject regions may be executed on the same input image using a plurality of types of machine-learned models. The inference unit 104 may perform a subject region detection process using a known method without using a machine-learned model. The inference unit 104 can detect a subject region using a method that uses a local characteristic value, such as scale-invariant feature transform (SIFT) or speeded-up robust features (SURF), a method using pattern matching, or the like.

The network I/F 105 is an interface for connecting the image-capturing control apparatus 100 to the communication network 700. The image-capturing control apparatus 100 (CPU 101) can communicate with external devices on the communication network 700, such as the bird's-eye camera 300, the sub camera 400, the main camera 500, and the role control apparatus 600, via the network I/F 105. The image-capturing control apparatus 100 may communicate with the external devices via another communication interface (e.g., a universal serial bus (USB) or Bluetooth® (not shown)).

The CPU 101 acquires the network addresses of the individual devices on the communication network 700 (the bird's-eye camera 300, the sub camera 400, the main camera 500, and the role control apparatus 600) at any timing and stores the network addresses in the RAM 102 to communicate therewith. The CPU 101 also acquires information on the individual devices (the types and names of the devices) at any timing (for example, at the first communication) and stores the information in the RAM 102. Thus, the CPU 101 knows at least identification information and the types of the bird's-eye camera 300, the sub camera 400, the main camera 500, and the role control apparatus 600. Alternatively, the user may assign desired names to the individual devices.

The user input unit 106 is an input device, such as a mouse, a keyboard, or a touch panel (not shown). The image-capturing control apparatus 100 accepts an instruction from the user via the user input unit 106.

The display unit 108 is a display such as a liquid crystal display (LCD). The display unit 108 displays a graphic user interface (GUI) screen provided by the OS or an image-capturing control application.

Bird's-Eye Camera 300

Next, an example of the functional configuration of the bird's-eye camera 300 will be described.

A CPU 301 is a microprocessor capable of executing programmed instructions. The CPU 301 controls the operations of the individual functional blocks to implement the functions of the bird's-eye camera 300 to be described later, for example, by reading programs stored in a ROM 303 into a RAM 302 and executing them.

The RAM 302 is used to load programs to be executed by the CPU 301 and to temporarily store data to be processed or being processed by the CPU 301. The RAM 302 may also be used as a buffer for video signals acquired by image capturing.

The ROM 303 is a rewritable non-volatile memory. The ROM 303 stores programs to be executed by the CPU 301, the setting values of the bird's-eye camera 300, user data, and so on. The ROM 303 can also be used as a storage destination of video signals. The ROM 303 may include an internal memory and a detachable memory card.

An image sensor 307 includes an image-capturing optical system and an image sensor. The image sensor may be a known charge-coupled device (CCD) or a complementary metal-oxide semiconductor (CMOS) color image sensor including a color filter of, for example, a primary-color Bayer array. The image sensor includes a pixel array in which a plurality of pixels is two dimensionally arranged and a peripheral circuit for reading signals from the individual pixels. Each pixel accumulates electric charges corresponding to the amount of incident light by photoelectric conversion. By reading a signal having a voltage corresponding to the amount of electric charge accumulated during an exposure period from each pixel, a group of pixel signals representing a subject image formed on its imaging plane (analog image signals) are obtained.

An image processing unit 306 generates signals or image data corresponding to intended use and acquires and/or generates various kinds of information by applying predetermined signal processing and image processing to the analog image signals output from the image sensor 307.

Examples of the processing applied by the image processing unit 306 may include preprocessing, color interpolation processing, correction processing, detection processing, data transformation processing, evaluation value calculation processing, and special effect processing.

The preprocessing may include analog-to-digital (A/D) conversion, signal amplification, reference-level adjustment, and defective pixel correction.

The color interpolation processing is performed when the image sensor 307 is provided with a color filter and compensates for the value of a color component not included in the individual pixel data constituting the image data. The color interpolation processing is also referred to as demosaicing processing.

The correction processing may include white balance adjustment, gradation correction, correction of image degradation due to the optical aberration of the image-capturing optical system (image recovery), correction of the effect of peripheral light falloff of the image-capturing optical system, and color correction.

The data transformation processing may include region cropping (trimming), combining, scaling, coding and decoding, and generation of header information (data file generation). The data transformation processing may also include generation of a video signal to be output to the outside and generation of video data to be recorded in the ROM 303.
The evaluation value calculation processing may include generation of a signal and an evaluation value for use in automatic focus detection (AF) and generation of an evaluation value for use in automatic exposure control (AE). The AF and AE are executed by the CPU 301.
The special effect processing may include application of a blur effect, change of color tone, and rewriting.
These processes are mere examples of processes applicable by the image processing unit 306 and are not intended to limit the processes applicable by the image processing unit 306.
The image processing unit 306 outputs acquired or generated information and data to the CPU 301 or the RAM 302 according to the use application.
The kind and the setting applied by the image processing unit 306 can be controlled by transmitting a command from the image-capturing control apparatus 100 to the bird's-eye camera 300.
A network I/F 305 is an interface for connecting the bird's-eye camera 300 to the communication network 700. The bird's-eye camera 300 (CPU 301) can communicate with external devices on the communication network 700, such as the image-capturing control apparatus 100, the sub camera 400, the main camera 500, and the role control apparatus 600, via the network I/F 305. The bird's-eye camera 300 may communicate with the external devices via another communication interface (e.g., a USB or Bluetooth® (not shown)).

Sub Camera 400

Next, an example of the functional configuration of the sub camera 400 will be described. Functional blocks having the same names in the sub camera 400 and the bird's-eye camera 300 are assumed to have the same functions, and thus, descriptions thereof are omitted.
The sub camera 400 is a PTZ camera, as described above, and can control the direction and the angle of view of image capturing from the outside. For this purpose, the sub camera 400 includes a drive unit 409 capable of pan and tilt operations and a zoom operation and a drive I/F 408. The drive I/F 408 is a communication interface between the drive unit 409 and a CPU 401.
The drive unit 409 includes a pan/tilt mechanism that supports the sub camera 400 so as to enable pan and tilt operations, a zoom mechanism that varies the angle of view of the image-capturing optical system, and a motor for driving these mechanisms. The zoom mechanism may use scaling (enlargement/reduction) of an image performed by the image processing unit 406.
The drive unit 409 drives the motor in response to an instruction received from the CPU 401 via the drive I/F 408 to adjust the optical axis direction and the angle of view of the image-capturing optical system.

Main Camera 500

Next, an example of the functional configuration of the main camera 500 will be described. Functional blocks having the same names in the main camera 500 and the sub camera 400 are assumed to have the same functions, and thus, descriptions thereof are omitted. The main camera 500 is operated by the user. Here, the user transmits a command via the communication network 700 to operate the main camera 500 by remote control.
However, in a case where the main camera 500 is not a PTZ camera, the main camera 500 may be directly operated by the user.
The image-capturing control apparatus 100 (CPU 101) can acquire information on the image capturing directions and the angles of view of the sub camera 400 and the main camera 500 from the sub camera 400 and the main camera 500, respectively, via a network I/F 505. The image capturing directions may be the respective pan and tilt angles of drive units 409 and 509 with a predetermined reference direction at 0°. The reference direction may be a direction facing the image capture range.

Role Control Apparatus 600

Next, an example of the functional configuration of the role control apparatus 600 will be described.
A CPU 601 is a microprocessor capable of executing programmed instructions. The CPU 601 controls the operations of the individual functional blocks to implement the functions of the role control apparatus 600, for example, by reading role setting programs stored in a ROM 603 into a RAM 602 and executing them.
The RAM 602 is used to load programs to be executed by the CPU 601 and to temporarily store data to be processed or being processed by the CPU 601. Part of the RAM 602 may also be used as a video memory of a display unit 608.

The ROM 603 is a rewritable non-volatile memory and stores programs to be executed by the CPU 601, setting values of the role control apparatus 600, user data, and so on.

A user input unit 611 is an input device, such as a button, a dial, a joystick, or a touch panel. The role control apparatus 600 accepts an instruction on the setting of the role of the sub camera 400 from the user via the user input unit 611.

A network I/F 605 is an interface for connecting the role control apparatus 600 to the communication network 700. The role control apparatus 600 (CPU 601) can communicate with external devices on the communication network 700, such as the bird's-eye camera 300, the sub camera 400, and the image-capturing control apparatus 100, via the network I/F 605. The role control apparatus 600 may communicate with the external devices via another communication interface (e.g., a USB or Bluetooth® (not shown)).

The display unit 608 is a display such as a liquid crystal display (LCD). The display unit 608 displays a GUI screen provided by the OS or a roll setting application.

The role control apparatus 600 stores role setting information, for example, in the ROM 603. The role setting information is information in which the identification information of the sub camera 400 is associated with information indicating the assigned role. The CPU 601 executes the role setting application to display a role setting screen on the display unit 608. The role setting screen displays, for example, the identification information of the sub camera 400 (e.g., its network address or the name set by the user) and the name of the currently set role in association with each other. The initial value of the currently set role may be a preset default role. The user may change the current role displayed in association with the desired sub camera 400 by operating the user input unit 611.

Upon detecting a user operation indicating completion of the setting operation, such as an operation on an OK button included in the role setting screen, the CPU 601 updates the role setting information stored in the ROM 603 according to the content of the role setting screen.

Upon receiving a role acquisition command via the network I/F 605, the CPU 601 reads the role setting information stored in the ROM 603 and transmits the information to the transmission source of the role acquisition command.

Although Figs. 1 and 2 illustrate the role control apparatus 600 as an independent apparatus, the image-capturing control application executed by the image-capturing control apparatus 100 may provide the same function as that of the role control apparatus 600. A role may be directly assigned to the sub camera 400, and the image-capturing control apparatus 100 may acquire the role assigned to the sub camera 400 from the sub camera 400.

The role that can be assigned to the sub camera 400 is a predetermined role indicating how to use information acquired from the main camera 500 in controlling the operation of the sub camera 400. Here, in one example, information on the main camera 500 is used in controlling the tracking target and the zooming operation of the sub camera 400.

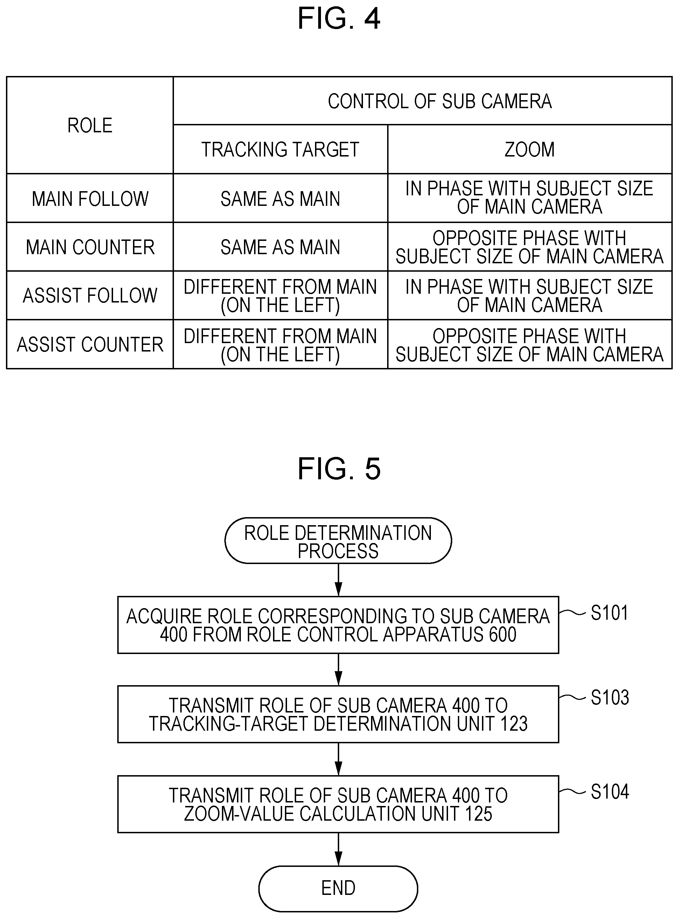

Fig. 4 illustrates examples of types of roles assignable to the sub camera 400 and control details associated with the respective roles. The control details for each role can be stored in the ROM 603 of the role control apparatus 600 and the ROM 103 of the image-capturing control apparatus 100 in the table form shown in Fig. 4. Here, any of "main follow", "main counter", "assist follow", and "assist counter" may be set as role. If the number of sub cameras 400 is two or more, the role can be assigned to each sub camera.

For the sub camera 400 having role "main follow", the image-capturing control apparatus 100 (CPU 101) sets the same tracking target as the tracking target of the main camera 500. Furthermore, when the main camera 500 is zoomed in or out, the image-capturing control apparatus 100 performs zoom control such that the size of the tracking target within the field of view of the sub camera 400 is in phase with the size of the target subject within the field of view of the main camera 500. Here, "in phase" indicates that the direction of change in the size of the tracking target within the field of view (the direction in which the subject size increases or decreases) is the same. In contrast, "opposite phase" indicates that the direction of change in the size of the tracking target within the field of view (the direction in which the subject size increases or decreases) is opposite.

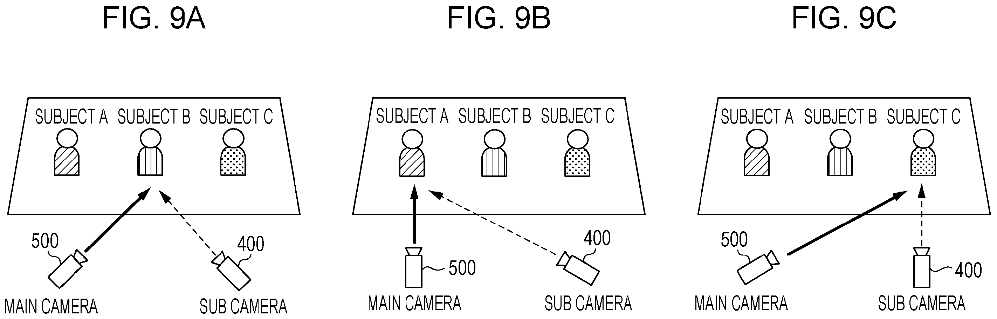

Here, an operation in a case where the role assigned to the sub camera 400 is "main follow" will be described with reference to Figs. 9A to 9C. The image-capturing control apparatus 100 controls the sub camera 400 to which role "main follow" is assigned so as to track the target subject of the main camera 500.

Accordingly, when it is determined that the target subject of the main camera 500 is the subject B, as illustrated in Fig. 9A, the CPU 101 determines the subject B as the tracking target of the sub camera 400. Thereafter, when it is determined that the target subject of the main camera 500 has changed to the subject A, as illustrated in Fig. 9B, the CPU 101 changes the tracking target of the sub camera 400 to the subject A. Similarly, when it is determined that the target subject of the main camera 500 has changed to the subject C, as illustrated in Fig. 9C, the CPU 101 changes the tracking target of the sub camera 400 to the subject C.

For the sub camera 400 having role "main counter", the image-capturing control apparatus 100 (CPU 101) sets the same tracking target as that of the main camera 500.

Furthermore, when the main camera 500 is zoomed in or out, the image-capturing control apparatus 100 performs zoom control such that the size of the tracking target within the field of view of the sub camera 400 is in opposite phase with the size of the target subject within the field of view of the main camera 500. Accordingly, when a zoom-in operation is performed on the main camera 500 so that the target subject appears larger, the image-capturing control apparatus 100 (CPU 101) performs zoom control of the sub camera 400 having this role so that the tracking target appears smaller. As used herein, "zoom-in" refers to changing the zoom toward the telephoto direction (i.e., toward the telephoto end), and "zoom-out" refers to changing the zoom toward the wide-angle direction (i.e., toward the wide-angle end). In zoom control by the image processing unit 406, "zoom-in" refers to decreasing a region cropped from the image and increasing the magnification of the cropped region relative to that before the region was changed. In contrast, "zoom-out" refers to increasing a region cropped from the image and decreasing the magnification of the cropped region relative to that before the region was changed.

For the sub camera 400 having role "assist follow", the image-capturing control apparatus 100 (CPU 101) sets a tracking target different from that of the main camera 500. Furthermore, when the main camera 500 is zoomed in or out, the image-capturing control apparatus 100 performs zoom control such that the size of the tracking target within the field of view of the sub camera 400 is equal to the size of the target subject within the field of view of the main camera 500.

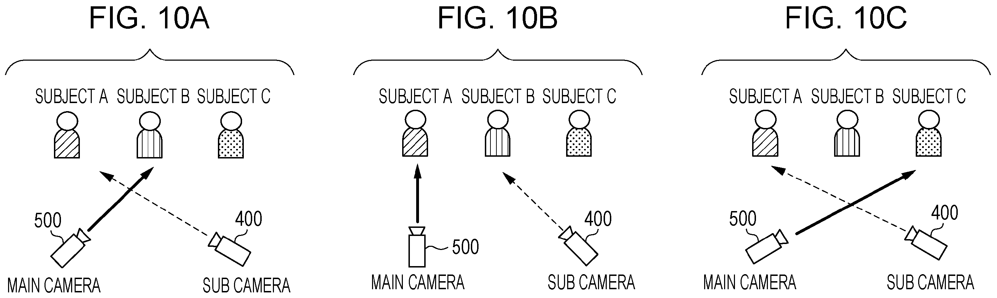

An operation in a case where the role assigned to the sub camera 400 is "assist follow" will be described with reference to Figs. 10A to 10C. The image-capturing control apparatus 100 controls the sub camera 400 to which role "assist follow" is assigned so as to track the subject on the left among the subjects different from the target subject of the main camera 500.

Accordingly, when it is determined that the target subject of the main camera 500 is the subject B, as illustrated in Fig. 10A, the CPU 101 determines the subject A on the left among the subjects A and C as the tracking target of the sub camera 400. Thereafter, when it is determined that the target subject of the main camera 500 has changed to the subject A, as illustrated in Fig. 10B, the CPU 101 changes the tracking target of the sub camera 400 to the subject B on the left among the subjects B and C. When it is determined that the target subject of the main camera 500 has changed to the subject C, as illustrated in Fig. 10C, the CPU 101 changes the tracking target of the sub camera 400 to the subject A on the left among the subjects A and B.

For the sub camera 400 having role "assist counter", the image-capturing control apparatus 100 (CPU 101) sets a tracking target different from the tracking target of the main camera 500. When the main camera 500 is zoomed in or out, the image-capturing control apparatus 100 performs zoom control such that the size of the tracking target within the field of view of the sub camera 400 is in opposite phase with the size of the target subject within the field of view of the main camera 500.

Here, for the sub camera 400 having the role of "assist follow" and "assist counter", a subject, among the subjects in the image different from the target subject of the main camera 500, that is located on the left is set as the tracking target of the sub camera 400. The tracking target of the sub camera 400 may be set according to another condition. For example, among the subjects in the image different from the target subject of the main camera 500, a subject on the right, top, or bottom may be set as the tracking target of the sub camera 400. Alternatively, a subject, among the subjects different from the target subject of the main camera 500, that is located hithermost or innermost may be set as the tracking target of the sub camera 400.

Only one of setting of the tracking target and zoom control may be executed, or another control item may be added.

The role setting information that the role control apparatus 600 stores in the ROM 603 includes information indicating role (the type names and numbers assigned to the types) associated with the identification information of the sub camera 400. The CPU 101 of the image-capturing control apparatus 100 acquires the role setting information from the role control apparatus 600 and executes operation control of the sub camera 400 corresponding to the type of the role assigned to the sub camera 400.

By dynamically changing the role assigned to the sub camera 400 using the role control apparatus 600, the tracking target of the sub camera 400 can be changed, allowing flexible automatic image capturing.

When the role assigned to the sub camera 400 is changed, the role control apparatus 600 may notifies an external device (for example, the image-capturing control apparatus 100) of the change. This allows the change of the assigned role to be immediately reflected to operation control of the sub camera 400.

Description of Operations of Apparatuses

The operations of the apparatuses of the multi-camera image capturing system will be described. Here, the image-capturing control apparatus 100 automatically controls the image-capturing operation of the sub camera 400 based on a video captured by the bird’s-eye camera 300, information acquired from the main camera 500, and a role assigned to the sub camera 400.

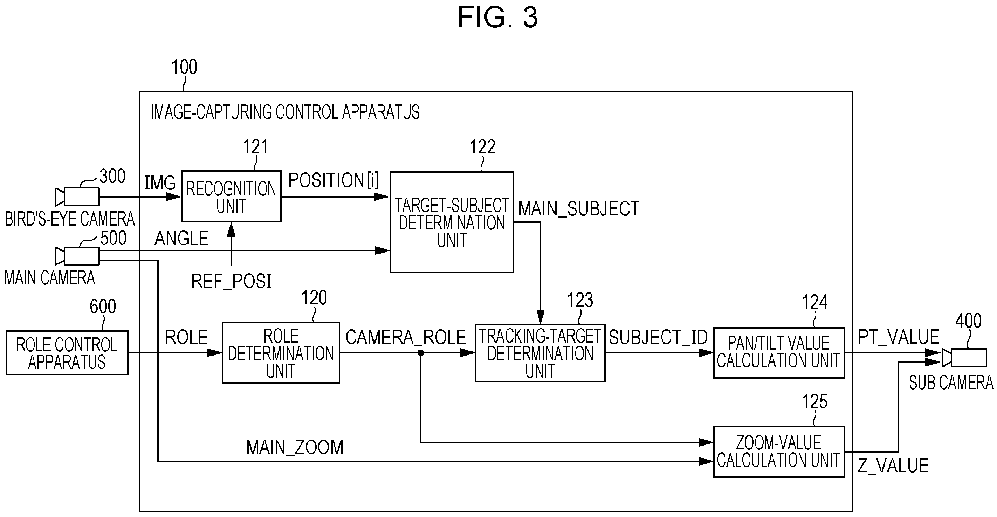

Fig. 3 is a diagram illustrating a series of processes performed when the image-capturing control apparatus 100 controls the operation of the sub camera 400, focusing on the main operations and signal flow. The functional blocks illustrated in the image-capturing control apparatus 100 schematically illustrate the main operations, which correspond to the main functions provided by the image-capturing control application. The functional blocks in Fig. 3 are implemented by the CPU 101 that executes the image-capturing control application and by one or more functional blocks of the image-capturing control apparatus 100 illustrated in Fig. 2.

Fig. 5 is a flowchart illustrating the operation of the CPU 101 serving as a role determination unit 120.

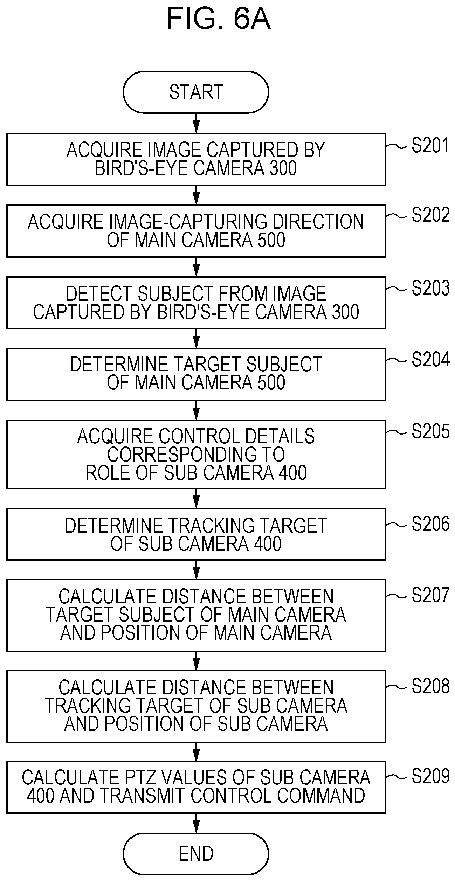

Figs. 6A to 6D are flowcharts for the respective operations of the image-capturing control apparatus 100, the bird's-eye camera 300, the main camera 500, and the sub camera 400.

The following description assumes that the three-dimensional coordinates of the viewpoint position and the image capturing direction (the optical axis direction) of the bird's-eye camera 300 are known by the image-capturing control apparatus 100. Known position information, such as the three-dimensional coordinates of the viewpoint positions of the sub camera 400 and the main camera 500, the coordinates of markers disposed in the image capture range, is stored in advance in the ROM 103 as default position information REF_POSI. The coordinate system for the position is predetermined according to the type of the position.

Operation of Role Determination Unit 120

First, the operation of the CPU 101 serving as the role determination unit 120 in Fig. 3 will be described with reference to the flowchart illustrated in Fig. 5. The operation described below is implemented by the CPU 101 executing the image-capturing control application.

The operation illustrated in the flowchart in Fig. 5 may be executed, but not limited to, at a timing at least before control of the image-capturing operation of the sub camera 400 is started. The operation is also executed when a notification that assignment of a role to the sub camera 400 has been changed is received from the role control apparatus 600 via the network I/F 105.

In S101, the CPU 101 serving as the role determination unit 120 acquires role (role setting information) corresponding to the sub camera 400 from the role control apparatus 600. The CPU 101 can acquire the role setting information from the role control apparatus 600, for example, by transmitting a role acquisition command to the role control apparatus 600 via the network I/F 105. The CPU 101 stores the acquired role setting information in the RAM 102.

In S103, the CPU 101 acquires the operation control details for the sub camera 400 with reference to the role setting information stored in the RAM 102 based on the identification information of the sub camera 400. The CPU 101 serving as the role determination unit 120 transmits the acquired operation control details (CAMERA_ROLE) to a tracking-target determination unit 123. In practice, the CPU 101 stores the operation control details in a specific area of the RAM 102 and refers to it when functioning as the tracking-target determination unit 123.

In S104, the CPU 101 serving as the role determination unit 120 transmits the acquired operation control details (CAMERA_ROLE) to a zoom-value calculation unit 125. In practice, the CPU 101 stores the operation control details in a specific area of the RAM 102 and refers to it when functioning as the zoom-value calculation unit 125.

Operation of Image-Capturing Control Apparatus 100

Next, an operation in which the image-capturing control apparatus 100 controls image capturing by the sub camera 400 will be described with reference to Figs. 3 and 6A. The operation described below corresponds to the CPU 101 serving as a recognition unit 121, a target-subject determination unit 122, a tracking-target determination unit 123, a pan/tilt-value calculation unit 124, and a zoom-value calculation unit 125 in Fig. 3. The operation described below is implemented by the CPU 101 executing the image-capturing control application.

In S201, the CPU 101 transmits an image-capturing instruction command to the bird's-eye camera 300 via the network I/F 105, using a predetermined protocol. In response to this command, the bird's-eye camera 300 starts to supply a video signal (moving-image data) IMG to a video input unit 107. The CPU 101 starts to store the video signal received by the video input unit 107 into the RAM 102, and then executes S202.

In S202, the CPU 101 acquires information ANGLE indicating the image capturing direction from the main camera 500. Specifically, the CPU 101 transmits an image-capturing-direction acquisition command to the main camera 500 via the network I/F 105, using a predetermined protocol. In response to the image-capturing-direction acquisition command, a CPU 501 of the main camera 500 transmits the information ANGLE indicating the current image capturing direction of the main camera 500 to the image-capturing control apparatus 100. One example of the information ANGLE may be the pan and tilt angles of a drive unit 509. The CPU 101 stores the acquired information ANGLE in the RAM 102.

In S203, the recognition unit 121 detects subjects from an image captured by the bird's-eye camera 300 and executes the following processing to identify the detected subjects.

(1) Applying subject region detection processing to the input frame image and storing the detection result.
(2) Converting position information (image coordinates) for each detected subject region.
(3) Applying identification processing for each detected subject region to specify identification information (for a new subject, applying information for identification processing).

(4) Storing identification information ID[n] in association with position information POSITION[n] for each detected subject region.

The recognition unit 121 is mainly implemented by the CPU 101 and the inference unit 104. The CPU 101 reads one frame of a video received from the bird's-eye camera 300 from the RAM 102 and inputs the frame image into the inference unit 104.

Hereinafter, processing performed by the recognition unit 121 will be described step by step.

(1) First, the inference unit 104 inputs the frame image to a machine-learned model and detects subject regions. The inference unit 104 stores, as a detection result, the position, size, and detection reliability of each detected subject region output from the machine-learned model into the RAM 102. The position and size of each subject region may be any information with which the position and size of a rectangular region circumscribing the subject region can be specified. Here, the central coordinates of the lower edge, the width, and the height of the rectangular region are used as the position and size of the subject region.

The inference unit 104 stores the detection result for the first frame image in the RAM 102 in association with the identification information ID[n] of the subject, where n is an integer indicating the index of the subject and takes a value from 1 to the total number of detected subject regions. The inference unit 104 also stores the subject regions detected from the first frame image as templates for identifying the individual subjects into the RAM 102 in association with the identification information ID[n] of the subject. If template matching is not used to identify each subject, the templates need not be stored.

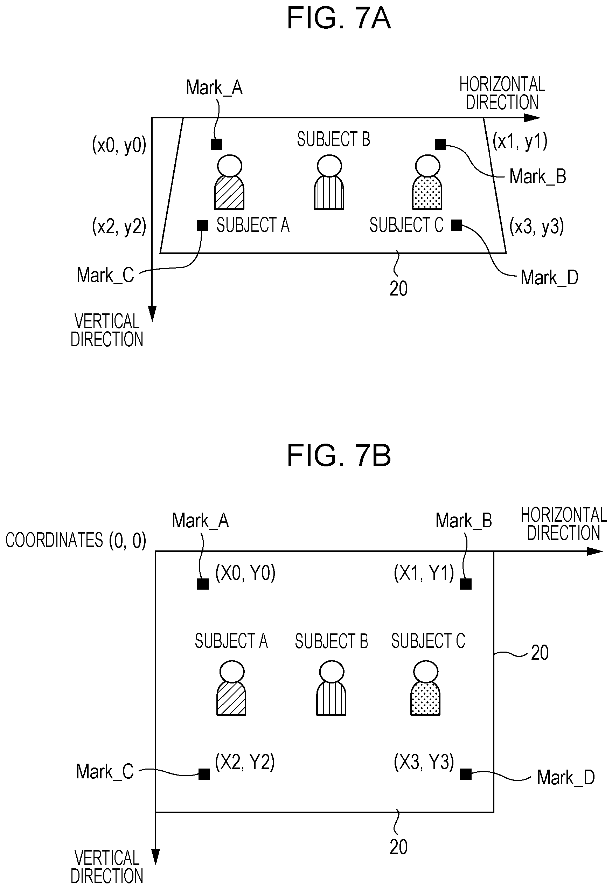

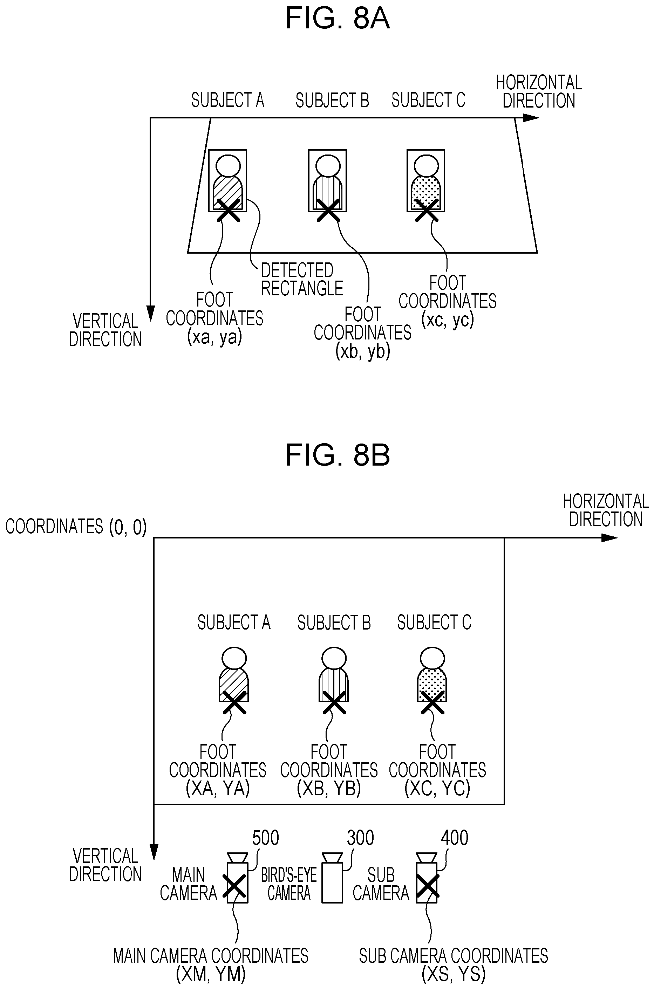

Fig. 8A illustrates one example of the result of subject detection processing, performed by the inference unit 104, for the video captured by the bird's-eye camera 300 illustrated in Fig. 7A. Here, the regions of subjects A to C located within an image capture range 20 are detected, and the coordinates of the center of the lower edge of each rectangular region circumscribing the subject region (foot coordinates) are output as its position.

If markers (Mark) are disposed at known positions within the image capture range 20 as illustrated in Fig. 7B for coordinate conversion to be described later, the CPU 101 detects marker images included in the frame image (Fig. 7A) and stores their positions in the RAM 102. The detection of the marker images may be configured to be executed by the inference unit 104. The marker images can be detected using any known method, such as pattern matching using the templates of markers. The marker images may be detected using a machine-learned model for marker detection stored in advance.

(2) Next, coordinate conversion to be executed by the inference unit 104 will be described. Fig. 7A schematically illustrates an image captured by the bird's-eye camera 300. Fig. 7B schematically illustrates the image capture range 20 seen from directly above at the center. The inference unit 104 converts the positions of the subject regions in the coordinate system of the bird's-eye camera 300 to the values of a coordinates system (plane coordinate system) when the image capture range 20 is seen from directly above at the center.

The coordinates are converted to values in the plane coordinate system because this is convenient for calculating a pan angle (a movement angle in a horizontal plane) to cause the sub camera 400 to capture a specific subject. Here, it is assumed that the sub camera 400 is installed such that the drive unit 409 performs a panning operation in a horizontal plane parallel to the floor of the image capture range 20.

The coordinate conversion can be performed using various methods; here, markers are arranged at a plurality of positions of the floor of the image capture range 20, and the coordinates are converted from the bird's-eye camera coordinate system to the plane coordinate system based on the marker positions in the image captured by the bird's-eye camera 300. The coordinate conversion may be performed without using markers, for example by using the viewpoint position and the image capturing direction of the bird's-eye camera 300.

The coordinate conversion may be performed according to Eq. 1 using a homography transformation matrix H.
Math 1

$$\begin{pmatrix} X \\ Y \\ W \end{pmatrix} = H \begin{pmatrix} x \\ y \\ 1 \end{pmatrix} \quad \ldots \text{Eq. 1}$$

where x and y on the right side are the horizontal coordinates and the vertical coordinates in the bird's-eye camera coordinate system, respectively, and X and Y on the left side are the horizontal coordinates and the vertical coordinates in the plane coordinate system, respectively.

The homography transformation matrix can be calculated by substituting the coordinates of four markers detected from the image and the coordinates of four markers (known) disposed in the image capture range 20 into Eq. 1 to solve the simultaneous equations. If the positional relationship between the image capture range 20 and the bird's-eye camera 300 is fixed, the homography transformation matrix H may be calculated in advance during test image capturing, and may be stored, for example, in the ROM 103.

The CPU 101 reads the positions of the subject regions from the RAM 102 in sequence and converts the positions to values in the plane coordinate system. Fig. 8B schematically illustrates a state in which the foot coordinates (x, y) of each subject region detected from the image captured by the bird's-eye camera 300, illustrated in Fig. 8A, are converted to the coordinates (X, Y) in the plane coordinate system using Eq. 1 and the homography transformation matrix H stored in the ROM 103. In other words, Fig. 8B illustrates the foot coordinates (XA, YA) of the subject A, the foot coordinates (XB, YB) of the subject B, and the foot coordinates (XC, YC) of the subject C.

The CPU 101 stores the foot coordinates of each subject obtained by coordinate conversion into the RAM 102 as POSITION[n]. The CPU 101 also stores main camera coordinates (XM, YM) and sub camera coordinates (XS, YS) in the RAM 102 as position information on the positions of the main camera 500 and the sub camera 400, respectively.

(3) Next, an operation in which the inference unit 104 specifies the identification information ID[n] of each subject will be described. Here, the subject is identified using template matching. The identification of the subject is performed on a processing result of subject detection processing from the second time onward. For the first processing result, identification information ID[n] is newly assigned to the subject region.

The inference unit 104 specifies the identification information ID[n] of the detected subject region by template matching using the template stored in the RAM 102. Thus, the subjects within the image capture range 20 are identified. The inference unit 104 calculates an evaluation value indicating the correlation between the individual templates for each of the detected subject regions. The inference unit 104 specifies identification information ID[n] corresponding to a template having a correlation equal to or higher a predetermined threshold and having the highest correlation as the identification information ID[n] of the subject region. The evaluation value may be any known value, such as a sum of absolute differences between pixel values.

The inference unit 104 assigns new identification information ID[n] to a subject region not having a correlation equal to higher than a certain threshold with all templates and adds an image of the subject region to the template.

The inference unit 104 may update an existing template using a subject region detected in the last frame image or delete a template in which a subject region having a correlation equal to or higher than a certain threshold is not present for a predetermined period. The inference unit 104 may also store, in the ROM 103, a template corresponding to identification information ID[n] that appears frequently.

Another method other than template matching may be used to identify a subject. For example, a subject region closest to at least one of the last detected position and size may be assigned the same identification information ID[n]. The position of the subject region in the current frame image may be predicted, using a Kalman filter or the like, from the transition of position in a plurality of past detection results associated with the same identification information, and the same identification information (ID) may then be specified for a subject region closest to the predicted position. A combination of these methods may be used. By not using template matching, the identification accuracy for different subjects having a similar appearance can be improved.

(4) The inference unit 104 stores, in the RAM 102, the specified identification information ID[n] in association with the position of a corresponding subject region (in the plane coordinate system) POSITION[n].

Among the processes (1) to (4), the processes other than subject detection may be executed by the CPU 101 in place of the inference unit 104.

Here, the identification information ID[n] and the position POSITION[n] on subjects within the image capture range 20 are acquired using a video captured by the bird's-eye camera 300. However, a video captured by the sub camera 400 may be used. When a plurality of sub cameras 400 is provided, the CPU 101 executes the operation illustrated in the flowchart of Fig. 6A for each sub camera 400. The position of each subject region is output as a value in the coordinate system of each sub camera 400. Thus, the bird's-eye camera 300 is not essential; however, the subject detection accuracy is considered to be higher when the bird's-eye camera 300 is used.

Referring back to Fig. 6A, in S204, the CPU 101 serving as the target-subject determination unit 122 in Fig. 3 determines the target subject, which is the tracking target of the main camera 500. The CPU 101 can determine the target subject of the main camera 500 from among the subjects detected in S203 based on the image capturing direction of the main camera 500 acquired in S202. The CPU 101 stores, in the RAM 102, the identification information ID[n] corresponding to the subject region determined as the target subject of the main camera 500 as the identification information MAIN_SUBJECT of the target subject.

For example, the CPU 101 can determine, as the target subject of the main camera 500, a subject closest to the image capturing direction of the main camera 500 in the plane coordinate system. When a plurality of subjects whose distances from the image capturing direction of the main camera 500 are equal to or less than a threshold is present, the target subject may be selected therefrom by the user.

When the target subject is to be selected by the user, the CPU 101 causes the display unit 108 or an external display device to display a frame image to which subject detection processing has been applied in S202, together with an indicator indicating the image capturing direction and an indicator indicating a subject region serving as a candidate of the target subject. The indicator of the subject region may be a rectangular frame indicating the outer edge of the subject region, as illustrated in Fig. 8A, or another indicator. The CPU 101 may cause the display unit 108 to display a message that prompts the user to select a target subject in the image.

The user can select a subject region corresponding to a desired target subject by operating the user input unit 106 (input device). Although no particular limitation is imposed on the selection method, the selection may be performed by an operation for designating a desired subject region through manipulation of a mouse or a keyboard.

Upon detecting a user operation for designating a subject region, the CPU 101 stores, in the RAM 102, identification information ID[n] corresponding to the designated subject region as the identification information MAIN_SUBJECT of the target subject.

In S205, the CPU 101 serving as the tracking-target determination unit 123 in Fig. 3 acquires control details CAMERA_ROLE corresponding to the role assigned to the sub camera 400. Specifically, the CPU 101 reads control details CAMERA_ROLE acquired through the role determination processing, described with reference to Fig. 5, and stored in the RAM 102. When a plurality of sub cameras 400 is provided, the CPU 101 executes the processes in S205 to S207 for each sub camera 400.

In S206, the CPU 101 serving as the tracking-target determination unit 123 determines a subject (tracking target) to be tracked and captured by the sub camera 400 according to the control details CAMERA_ROLE. The CPU 101 determines the tracking target of the sub camera 400 according to the role for the tracking target included in the control details CAMERA_ROLE (Fig. 4).

In a case where the tracking target of the sub camera 400 is set to the same subject as the target subject of the main camera 500, the CPU 101 sets the identification information MAIN_SUBJECT of the target subject determined in S203 as the identification information SUBJECT_ID of the tracking target of the sub camera 400.

In a case where the tracking target of the sub camera 400 is set to a subject on the left among the subjects different from the target subject of the main camera 500, the CPU 101 detects, among the subject regions detected in S203, a subject region located on the left of the subject regions other than the target subject. The CPU 101 sets identification information ID[n] corresponding to the detected subject region as the identification information SUBJECT_ID of the tracking target of the sub camera 400.

The CPU 101 writes the determined identification information SUBJECT_ID of the detected tracking target into the RAM 102. When the tracking target can be varied depending on the sub camera 400, the CPU 101 stores the identification information SUBJECT_ID of the tracking target in association with the identification information of the sub camera 400.

When the tracking target has changed, the CPU 101 retains the information of the previous tracking target in the RAM 102 without deleting it.

In S207, the CPU 101 calculates the distance between a coordinate position at which the target subject of the main camera 500 is located and a coordinate position at which the main camera 500 is disposed.

In S208, the CPU 101 calculates the distance between a coordinate position at which the tracking target of the sub camera 400 is located and a coordinate position at which the sub camera 400 is disposed.

Coordinates at which the individual subjects are located are obtained by the CPU 101 reading foot coordinates POSITION[n] stored in the RAM 102. In other words, the CPU 101 obtains the foot coordinates (XA, YA) of the subject A, the foot coordinates (XB, YB) of the subject B, and the foot coordinates (XC, YC) of the subject C in Fig. 8A.

Position information on the location of the main camera 500 is obtained by the CPU 101 reading the main camera coordinates (XM, YM) from the ROM 103. Similarly, position information on the location of the sub camera 400 is obtained by the CPU 101 reading the sub camera coordinates (XS, YS) from the ROM 103.

The CPU 101 determines the distance DISTANCE_MAIN between the target subject of the main camera 500 and the main camera 500 from the obtained position information on the main camera 500 and the foot coordinates of the individual subjects. Similarly, the CPU 101 determines the distance DISTANCE_SUB between the tracking target of the sub camera 400 and the sub camera 400 from the obtained position information on the sub camera 400 and the foot coordinates of the individual subjects.

In S209, the CPU 101 serving as the pan/tilt-value calculation unit 124 calculates the amounts of change in a pan angle and a tilt angle necessary for the sub camera 400 to track and capture the tracking target determined in S206. The CPU 101 serving as the zoom-value calculation unit 125 calculates the zoom control value for the sub camera 400 in accordance with a change in the angle of view of the main camera 500.

When a plurality of sub cameras 400 is provided, the amount of change in the pan angle and the tilt angle and the zoom control value may be calculated for each sub camera 400.

First, the operation of the CPU 101 serving as the pan/tilt-value calculation unit 124 will be described. Here, the following information is stored in advance, as default position information REF_POSI, in the ROM 103 for each sub camera 400.

· The three-dimensional coordinates of the installation position of the sub camera 400 (values in the plane coordinate system).
· An image capturing direction corresponding to the initial values of the pan angle and the tilt angles of the drive unit 409.
· Controllable range of pan and tilt angles

The CPU 101 reads position information POSITION_OH corresponding to the identification information SUBJECT_ID of the tracking target of the sub camera 400 from the RAM 102. The CPU 101 first determines a pan angle from the position information POSITION_OH and the installation position of the sub camera 400.

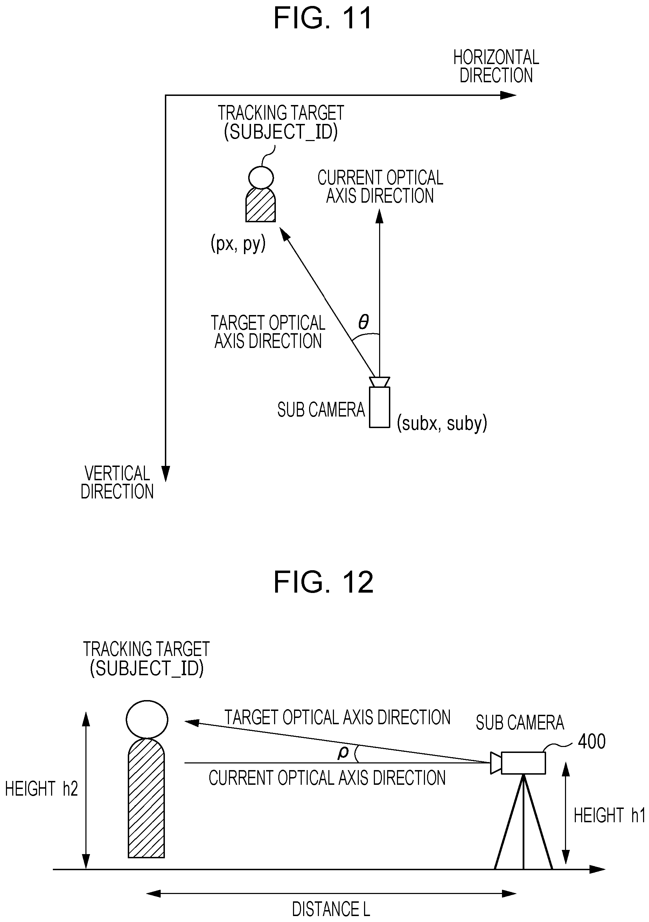

Fig. 11 is a diagram illustrating an example of the positional relationship between the sub camera 400 and the tracking target in the plane coordinate system. Here, a pan angle θ at which the optical axis of the sub camera 400 is directed to the subject position is determined. The CPU 101 calculates the pan angle θ using Eq. 2.
Math 2

$$\theta = \tan^{-1}\frac{px - subx}{py - suby} \quad \text{(rad)} \qquad \text{...Eq. 2}$$

where px and py are the horizontal coordinate and the vertical coordinate of the position information POSITION_OH, respectively, corresponding to the identification information SUBJECT_ID of the tracking target, subx and suby are the horizontal coordinate and the vertical coordinate of the installation position of the sub camera 400, respectively. Here, the current pan angle is an initial value 0°, and the current optical axis direction is the vertical direction (Y-axis direction). If the current optical axis direction is not the vertical direction, the angle difference between the current optical axis direction and the vertical direction is reflected to the angle calculated using Eq. 2. The pan direction is counterclockwise when subx > px, and clockwise when subx < px.
Referring next to Fig. 12, a method for determining the tilt angle will be described. Fig. 12 illustrates a state in which the sub camera 400 and its tracking target are viewed from the side. It is assumed that the current optical axis of the sub camera 400 is directed horizontally at a height h1, and that the height of the face of the tracking target toward which the optical axis is directed is h2. It is assumed that the heightwise angular difference (tilt angle) between the current optical axis direction and the target optical axis direction is ρ. The CPU 101 calculates the tilt angle ρ using the following Eq. 3 and Eq. 4.
Math. 3

$$L = \sqrt{(px - subx)^2 + (py - suby)^2} \qquad \text{...Eq. 3}$$

$$\rho = \tan^{-1}\frac{h2 - h1}{L} \quad \text{(rad)} \qquad \text{...Eq. 4}$$

The coordinates used in Eq. 4 are the same as the coordinates used in Eq. 2. The values h1 and h2 are input to the image-capturing control application in advance and are stored in the RAM 102. In this case, the identification number associated with h2 of each subject is set to be the same as an identification number assigned in subject detection processing. Alternatively, h2 may be a value measured in real time using a sensor (not shown).
It is assumed that the current tilt angle is initial value 0° and that the current optical axis direction is horizontal (constant in height). When the current optical axis direction is not horizontal, the angular difference between the current optical axis direction and the horizontal direction is reflected to the angle calculated using Eq. 4. The direction of tilt is downward when h1 > h2, and upward when h1 < h2.

The CPU 101 periodically communicates with the sub camera 400 via the communication network 700 to acquire the current optical axis direction (the pan angle and the tilt angle of the drive unit 409) and stores it in the RAM 102. The communication period may be set to be, for example, equal to or less than the reciprocal of the frame rate. Alternatively, the CPU 101 may store, in the RAM 102, the total value of the pan angle and the tilt angle of the sub camera 400 from the initial state, obtained through control, and may use the total value as the current optical axis direction.

In this manner, the CPU 101 calculates the amount of change in the pan angle and the tilt angle of the sub camera 400 and stores the change amount in the RAM 102. In a case where a plurality of sub cameras 400 is provided, the CPU 101 calculates the amount of change in the pan angle and the tilt angle for each sub camera 400.

The amount of change in the pan angle and the tilt angle may be set to an angular velocity for rotating the sub camera 400 toward the tracking target. For example, the CPU 101 acquires the current pan angle and tilt angle from the sub camera 400 via the communication network 700. The CPU 101 calculates the difference between the pan angle $\theta$ read from the RAM 102 and the current pan angle. The CPU 101 also calculates the difference between the tilt angle $\rho$ read from the RAM 102 and the current tilt angle. The CPU 101 stores, in the RAM 102, the amount of change in the pan angle and the amount of change in the tilt angle thus calculated.

The amounts of change in the pan angle and the tilt angle may be calculated using a video captured by the sub camera 400, instead of a video captured by the bird's-eye camera 300. In this case, the CPU 101 may calculate the amount of change in the pan angle based on the difference in the horizontal difference between the current optical axis direction and the direction toward the tracking target in the coordinate system of the sub camera 400 and may calculate the amount of change in the tilt angle based on the difference in the vertical direction therebetween. Another image capturing system may be employed in which the image capturing direction for tracking and capturing the tracking target is changed only in one of the pan direction and the tilt direction. In such an image capturing system, only one of the amounts of change in the pan angle and the tilt angle may be calculated.

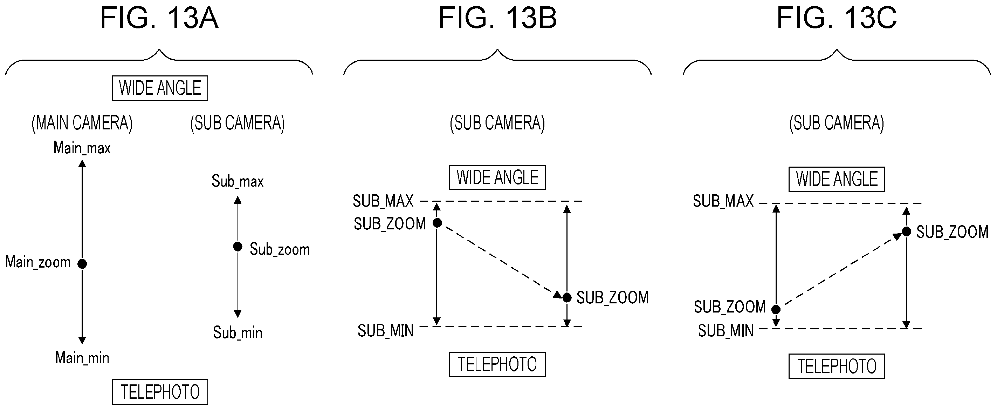

Next, the operation of the CPU 101 serving as the zoom-value calculation unit 125 will be described. Fig. 13A is a diagram illustrating examples of ranges of zoom control values for the main camera and the sub camera. Here, the main camera 500 and the sub camera 400 optically change the angles of view (the image-capturing optical system has a zoom function). However, a similar function may be implemented by digital zoom using the image processing units 406 and 506.

The zoom control value is a parameter having a value corresponding to the angle of view. In this embodiment, the smaller (narrower) the angle of view, the smaller the zoom control value. A zoom control value on the telephoto side is smaller than a zoom control value on the wide-angle side. The sub camera 400 and the main camera 500 can control their image-capturing optical systems to an angle of view corresponding to the zoom control value by transmitting a command specifying a zoom control value. In other words, the zoom control value is information on the angle of view and indicating the zoom state. The zoom control value may be, for example, a focal length (mm) of an image-capturing optical system corresponding to a full-frame image sensor with a focal length of 35 mm. In this case, a zoom control value on the telephoto side is larger than a zoom control value on the wide-angle side.

In Fig. 13A, the range of the zoom control value MAIN_ZOOM of the main camera 500 is from main_min to main_max. The zoom range of the sub camera 400 is sub_min to sub_max. The values main_min and sub_min are zoom control values corresponding to the telephoto ends of the main camera 500 and the sub camera 400, respectively. The values main_max and sub_max are zoom control values corresponding to the wide-angle ends of the main camera 500 and the sub camera 400, respectively. Figs. 13A to 13C illustrate an example in which the range of the zoom control value of the main camera 500 is larger than the range of the zoom control value of the sub camera 400 at both of the telephoto end and the wide-angle end.

The CPU 101 serving as the zoom-value calculation unit 125 calculates the zoom control value of the sub camera 400 corresponding to a change in the angle of view of the main camera 500. Here, the CPU 101 determines the angle of view of the sub camera 400 in consideration of information based on the state of the main camera 500 or a video captured by the main camera 500, the role assigned to the sub camera 400, and information on the distance between the positions of the main camera 500 and the sub camera 400 and the individual subjects to be captured.

First, the CPU 101 periodically acquires information MAIN_ZOOM indicating the angle of view of the main camera 500 and stores it in the RAM 102. The CPU 101 can determine a zoom operation of the main camera 500 and its phase, for example, by detecting a change in the angle of view of a video captured by the main camera 500. For example, the CPU 101 may detect a change in the angle of view based on the sizes of the subject regions or a temporal change in the distance therebetween.

When the information MAIN_ZOOM has changed, the CPU 101 calculates a zoom control value Z_VALUE for the sub camera 400 in accordance with control details CAMERA_ROLE corresponding to the role assigned to the sub camera 400.

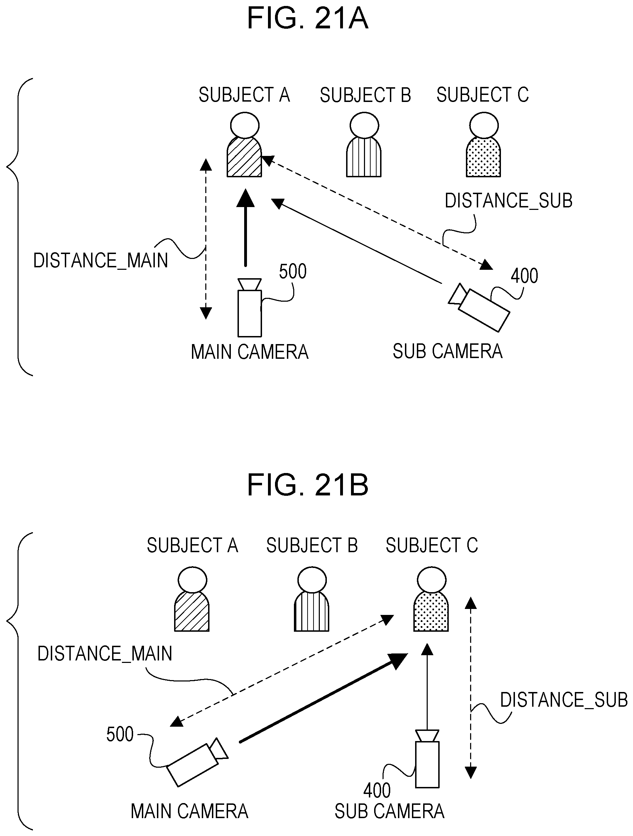

Figs. 21A and 21B illustrate the positions of the main camera 500, the sub camera 400, and the subjects A to C, and the relationship between the target subject of the main camera 500 and the tracking target of the sub camera 400.

Fig. 21A illustrates an example in which the target subject of the main camera 500 and the sub camera 400 is the subject A. Fig. 21B illustrates an example in which the target subject of the main camera 500 and the sub camera 400 is the subject C.

In this embodiment, the following processing is performed to enable the user to perform image capturing at an intended angle of view in cooperation with the angle of view of the main camera 500.

Specifically, the CPU 101 performs control in consideration of the distance between the coordinate positions of the main camera 500 and the sub camera 400 and the coordinate positions of the target subject of the main camera 500 and the tracking target of the sub camera 400. The CPU 101 performs processing such that the size of the target subject within the angle of view of the main camera 500 is equal to the size of the tracking target within the angle of view of the sub camera 400.

First, control in a case where the role of the sub camera 400 is "main follow" will be described.

In other words, the CPU 101 performs control such that the subject captured by the main camera 500 and the subject captured by the sub camera 400 change in size (made equal) in the same phase.

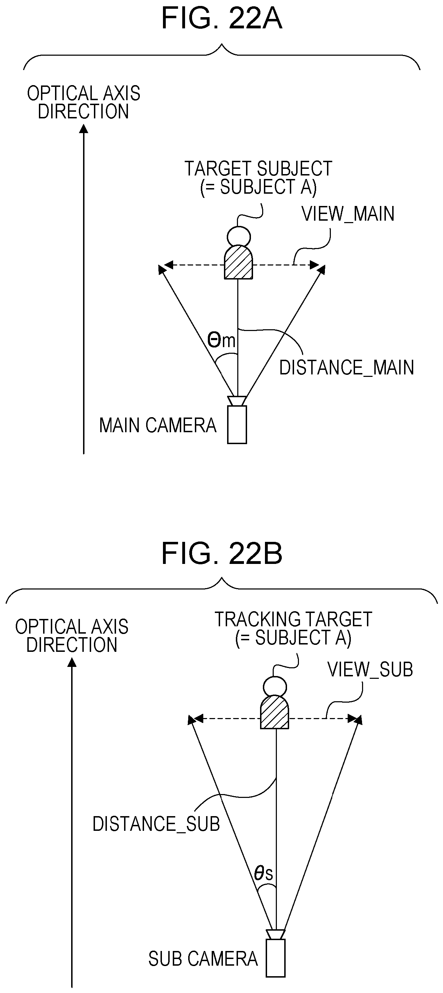

Angle-of-view control according to this embodiment will be described with reference to Figs. 22A and 22B. Fig. 22A is a diagram illustrating the angle of view of the main camera 500 in the example of Fig. 21A. Fig. 22B is a diagram illustrating, in the example of Fig. 21A, the angle of view of the sub camera 400 for making the size of the tracking target within the angle of view of the sub camera 400 equal to the size of the target subject within the angle of view of the main camera 500.

The angle of view Θm of the main camera 500 (= the zoom control value MAIN_ZOOM/2 of the main camera 500), and the distance DISTANCE_MAIN between the main camera 500 and the target subject of the main camera 500 calculated in S207, illustrated in Fig. 22A, are known values. The distance DISTANCE_SUB between the sub camera 400 and the tracking target of the sub camera 400 calculated in S208, illustrated in Fig. 22B, is also a known value. The angle of view Θs of the sub camera 400 can be calculated based on those known values using the following calculation expressions. The image capture range VIEW_MAIN of the main camera 500 and the image capture range VIEW_SUB of the sub camera 400 illustrated in Fig. 22B can be calculated using Eq. 5 and Eq. 6.

$$\mathrm{VIEW_MAIN} = \tan(\Theta m) \times \mathrm{DISTANCE_MAIN} \times 2 \cdots \mathrm{Eq.}\ 5$$

$$\mathrm{VIEW_SUB} = \tan(\Theta s) \times \mathrm{DISTANCE_SUB} \times 2 \cdots \mathrm{Eq.}\ 6$$

Here, to make the size of the target subject within the angle of view of the main camera 500 equal to the size of the tracking target within the angle of view of the sub camera 400, the following control is required. In other words, control is performed so that the image capture range VIEW_MAIN of the main camera 500 becomes equal to the image capture range VIEW_SUB of the sub camera 400. For that purpose, the angle of view Θs of the sub camera 400 is calculated using Eq. 7.

$$\Theta s = \tan\text{-}1(\tan(\Theta m) \times (\mathrm{DISTANCE_MAIN}/\mathrm{DISTANCE_SUB})) \cdots \mathrm{Eq.}\ 7$$

The CPU 101 stores, in the RAM 102, a value obtained by doubling Θs calculated in Eq. 7 as a zoom control value SUB_ZOOM for image capturing at the angle of view of the sub camera 400.

Next, control in a case where the role of the sub camera 400 is "main counter" will be described. In other words, the CPU 101 performs control such that the size of the subject captured by the main camera 500 and the size of the subject captured by the sub camera 400 change in opposite phases. The role "main counter" requires control such that the size within the angle of view of the tracking target of the sub camera 400 changes in opposite phase with the size within the angle of view of the tracking target of the main camera 500. Images in which the size of the tracking target within its angle of view is controlled in opposite phase are illustrated in Fig. 13B and 13C. Fig. 13B illustrates an example in which the value of SUB_ZOOM before the size of the tracking target within its angle of view is converted to opposite phase is on the wide-angle side. In this case, control is performed such that SUB_ZOOM is converted to a value SUB_ZOOM on the telephoto side.

Specifically, the CPU 101 calculates SUB_ZOOM in the case where the role of the sub camera 400 is "main counter" by substituting SUB _ZOOM in the case where the role, calculated based on Eq. 7, is "main follow" into the right side of Eq. 8.

$$\mathrm{SUB_ZOOM} = \mathrm{SUB_MAX} - (\mathrm{SUB_ZOOM} - \mathrm{SUB_MIN}) \cdots \mathrm{Eq.}\ 8$$

Fig. 13C illustrates an example in which the value of SUB_ZOOM before the size of the tracking target within its angle of view is converted to opposite phase is on the telephoto side. Similarly, in this case, control is performed using Eq. 8 such that SUB_ZOOM on the telephoto side is converted to a value SUB_ZOOM on the wide-angle side.

While this embodiment illustrates examples in which the role of the sub camera 400 is "main follow" or "main counter" for tracking the same subject as the main camera 500, similar operations may also be performed for other roles. For example, also in a case where the role of the sub camera 400 is "assist follow" or "assist counter" for tracking a subject different from that of the main camera 500, similar operations are performed for field-of-view control in which the zoom value is controlled, with only the tracked subject being changed.

Here, in a case where the main camera 500 controls its angle of view by doing cropping using a digital zoom, the CPU 101 can determine the zoom control value SUB_ZOOM of the sub camera 400 in accordance with the size of an area cropped by the main camera 500. Specifically, the CPU 101 sets the zoom control value SUB_ZOOM smaller (corresponding to higher magnification) as the size of the area cropped by the main camera 500 becomes smaller, and sets the zoom control value SUB_ZOOM larger (corresponding to lower magnification) as the size becomes larger.

The details of zoom control associated with the role of the sub camera 400 are not limited to control for in-phase or opposite-phase with respect to the main camera 500. For example, a zoom operation independent of a change in the angle of view of the main camera 500 may be associated with the role. For example, an automatic zoom operation such as to maintain the size of the tracking target constant may be associated with the role. The angle of view of the sub camera 400 may be fixed to a specific angle of view. By adding a role associated with such zoom control to control details for each role illustrated in Fig. 4, or by changing the details of zoom control for the roles illustrated in Fig. 4, various zoom controls of the sub camera 400 are enabled.

The CPU 101 reads, from the RAM 102, the amount of change in pan and tilt angles and the zoom control value calculated in S209. The CPU 101 generates a control command PT_VALUE that instructs the sub camera 400 to change the pan angle and the tilt angle corresponding to the amounts of change. The CPU 101 also generates a control command Z_VALUE that instructs the sub camera 400 to change the angle of view corresponding to the zoom control value. The format of the control commands is predetermined. The CPU 101 stores the generated control commands PT_VALUE and Z_VALUE in the RAM 102. In a case where there is no need to generate the control commands, such as when the tracking target remains still or when the angle of view of the main camera 500 does not change, step S209 may be skipped.

The CPU 101 reads the control commands PT_VALUE and Z_VALUE from the RAM 102 and transmits the values to the communication network 700 via the network I/F 105. The sub camera 400 receives the control commands PT_VALUE and Z_VALUE via a network I/F 405.

The CPU 101 executes the processing from S201 onward on the next frame image of a video captured by the bird's-eye camera 300. The processing illustrated in Fig. 6A need not necessarily be executed for each frame.

While a case has been described in which the angle of view of the main camera 500 is the same as that of the sub camera 400, this embodiment is not limited to such a case. The angle of view of the main camera 500 and the angle of view of the sub camera 400 may be different from each other and may be controlled to respective predetermined angles of view.

For example, in a case where the subject occupies a small proportion of the angle of view of the main camera 500, the CPU 101 controls the sub camera 400 so that the subject occupies a large proportion of the angle of view.

Specifically, the CPU 101 controls the sub camera 400 so that the angle of view VIEW_SUB is smaller than the angle of view VEIW_MAIN of the main camera 500.

In a case where the subject occupies a large proportion of the angle of view of the main camera 500, the CPU 101 controls the sub camera 400 so that the subject occupies a small proportion of the angle of view.

Specifically, the CPU 101 controls the sub camera 400 so that the angle of view VIEW_SUB is larger than the angle of view VEIW_MAIN of the main camera 500. By performing such control, the sub camera 400 and the main camera 500 can perform image capturing at respective predetermined different angles of view.

In a case where a plurality of sub cameras 400 is provided, the angles of view of the sub cameras 400 may be controlled using Eq. 7 to Eq. 9 based on the distance between the coordinate positions of the main camera 500 and the plurality of sub cameras 400 and the tracking targets of the sub cameras 400.

Operation of Bird's-Eye Camera 300

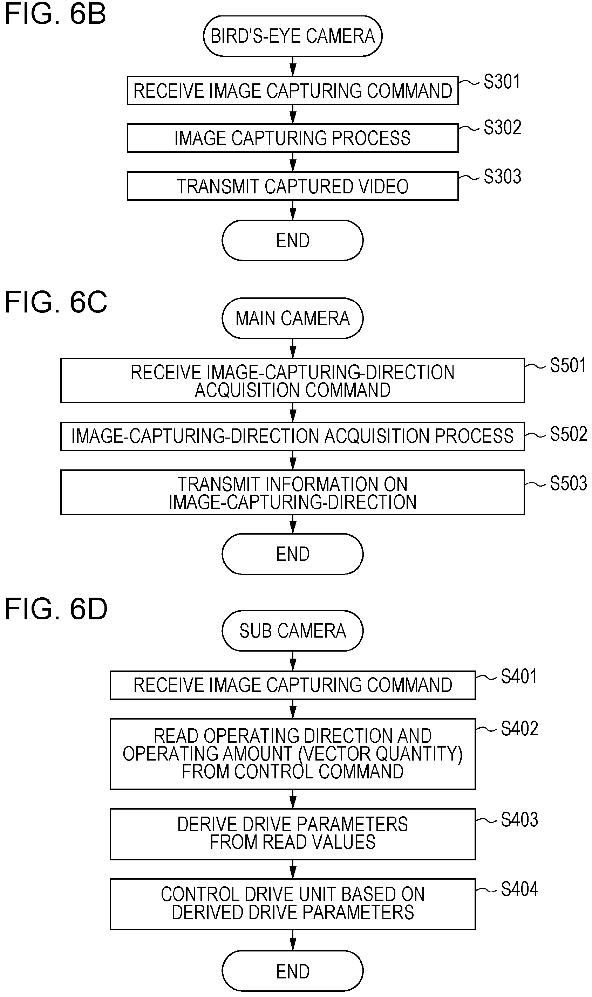

Next, the operation of the bird's-eye camera 300 will be described with reference to Fig. 6B. The operation described below is implemented by the CPU 301 executing a program.

When power is applied to the bird's-eye camera 300, the individual functional blocks are initialized by the CPU 301 and enter an image-capturing standby state. In the image-capturing standby state, the CPU 301 may start moving-image capturing processing for live view and output image data for display generated by the image processing unit 306 to the image-capturing control apparatus 100 via the network I/F 305.

In the image-capturing standby state, the CPU 301 waits for reception of a control command via the network I/F 305. Upon receiving the control command, the CPU 301 executes an operation corresponding to the control command. Here, an operation when an image capturing command is received, as the control command, from the image-capturing control apparatus 100 will be described.

In S301, the CPU 301 receives an image capturing command from the image-capturing control apparatus 100 via the network I/F 305.

The image capturing command may include image capturing parameters, such as a frame rate and resolution. The image capturing command may further include settings for processing applied by the image processing unit 306.

In S302, the CPU 301 starts processing for capturing a moving image to be supplied to the image-capturing control apparatus 100 in response to receiving the image capturing command. In this moving-image capturing process, a moving image of higher quality than that captured through a live view moving-image capturing process is captured. For example, at least one of the resolution and the frame rate of the moving image is higher than that of the live view moving image. The image processing unit 306 applies the process to the image based on the settings for moving images to be supplied to the image-capturing control apparatus 100. The image processing unit 306 stores the generated moving image data in the RAM 302 in sequence.

In S303, the CPU 101 reads the moving image data from the RAM 302 and transmits the moving image data to the image-capturing control apparatus 100 via the network I/F 305. From then on, the processing from image capturing to supply of moving image data is repeated until a control command to stop the image capturing.

Operation of Main Camera 500

Next, the operation of the main camera 500 will be described with reference to Fig. 6C. The operation described below is implemented by the CPU 501 executing a program.

When power is applied to the main camera 500, the CPU 501 initializes the individual functional blocks and starts processing for capturing a moving image to be supplied to the image-capturing control apparatus 100. The image processing unit 506 applies the processing to an analog image signal obtained from the image sensor 507 based on settings for a moving image to be supplied to the image-capturing control apparatus 100. The image processing unit 506 stores the generated moving image data in the RAM 502 in sequence. The CPU 501 reads the moving image data from the RAM 502 and supplies the moving image data to the image-capturing control apparatus 100 via the network I/F 505.

The CPU 501 waits for reception of a control command via the network I/F 505 while suppling the moving image data to the image-capturing control apparatus 100. Upon receiving a control command, the CPU 501 executes an operation corresponding to the control command. Here, an operation when an image-capturing-direction acquisition command has been received will be described. When a pan/tilt control command PT_VALUE or a zoom control command Z_VALUE has been received, the CPU 501 operates the drive unit 509 in accordance with the command.

In S501, the CPU 501 receives an image-capturing-direction acquisition command via the network I/F 505. The CPU 501 stores the received image-capturing-direction acquisition command in the RAM 502.

In S502, in response to reception of the image-capturing-direction acquisition command, the CPU 501 acquires the current pan angle and tilt angle from the drive unit 509 via a drive I/F 508 and stores the current pan angle and tilt angle in the RAM 502.

In S503, the CPU 501 reads the current pan angle and tilt angle from the RAM 502 and transmits them, as information ANGLE on the image capturing direction, to the image-capturing control apparatus 100 via the network I/F 305.

Operation of Sub Camera 400

Next, the operation of the sub camera 400 will be described with reference to Fig. 6D. The operation described below is implemented by the CPU 401 executing a program.

When power is applied to the sub camera 400, the CPU 401 initializes the individual functional blocks and starts processing for capturing a moving image to be supplied to the image-capturing control apparatus 100. The image processing unit 406 applies the processing to an analog image signal obtained from the image sensor 407 based on settings for a moving image to be supplied to the image-capturing control apparatus 100. The image processing unit 406 stores the generated moving image data in a RAM 402 in sequence. The CPU 401 reads the moving image data from the RAM 402 and supplies the moving image data to the image-capturing control apparatus 100 via the network I/F 405.

The CPU 401 waits for reception of a control command via the network I/F 405 while suppling the moving image data to the image-capturing control apparatus 100. Upon receiving a control command, the CPU 401 executes an operation corresponding to the control command. Here, an operation when a pan/tilt control command PT_VALUE or a zoom control command Z_VALUE has been received from the image-capturing control apparatus 100 will be described.

In S401, the CPU 401 receives at least one of the pan·tilt control command PT_VALUE and the zoom control command Z_VALUE from the image-capturing control apparatus 100 via the network I/F 405. The CPU 401 stores the received control command in the RAM 402.

In S402, the CPU 401 reads an operating direction and a corresponding operating amount from the control command stored in the RAM 402 and stores the amounts in the RAM 402. In the case of the pan·tilt control command PT_VALUE, the operating direction is the direction of pan and/or tilt, and the operating amount is a target angle. In the case of the zoom control command Z_VALUE, the operating amount is a zoom control value, and the operating direction can be specified from the zoom control value, and therefore, reading and storing of the operating direction are not required.

In S403, the CPU 401 generates drive parameters for the drive unit 409 based on the operating direction and the operating amount read in S403. The CPU 401 may acquire drive parameters corresponding to a combination of the operating direction and the operating amount from a table stored in advance in a ROM 403. In a case where the operating amount is given as a target value (a target angle or zoom control value), the CPU 401 acquires the drive parameters from the difference from the current value.

In S404, the CPU 401 controls the drive unit 409 via the drive I/F 408 based on the drive parameters acquired in S404. Thus, the drive unit 409 changes the image capturing direction of the sub camera 400 to an operating direction and an angle designated by the pan·tilt control command PT_VALUE. The drive unit 409 also changes the angle of view of the image-capturing optical system to a zoom control value designated by the zoom control command Z_VALUE.

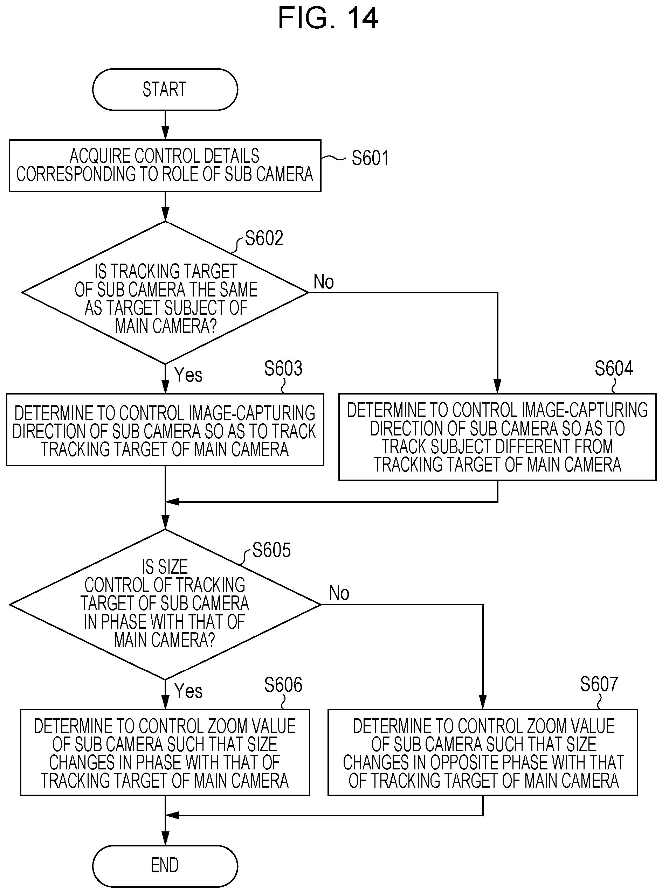

Next, an operation in which the image-capturing control apparatus 100 controls the image capturing direction (pan and tilt) and the angle of view (zoom control value) of the sub camera 400 in accordance with a role assigned to the sub camera 400 will be described in more detail with reference to the flowchart illustrated in Fig. 14. The operation illustrated in the flowchart of Fig. 14 is executed as part of the operation from S205 to S207 in Fig. 6A.

Step S601 corresponds to step S205, in which CPU 101 reads the control details CAMERA_ROLE stored in the RAM 102 in S103 of Fig. 5.

Steps S602 to S607 are performed, for example, in S206 to S209.

In S602, the CPU 101 determines whether the specification of the tracking target of the sub camera 400 included in the control details CAMERA_ROLE indicates the tracking target (target subject) of the main camera 500. For example, if the specification of the tracking target of the sub camera 400 has a value indicating "the same as the main", the CPU 101 determines that the specification of the tracking target of the sub camera 400 indicates the tracking target of the main camera 500 and executes step S603. In contrast, if the specification of the tracking target of the sub camera 400 has a value indicating "different from the main (the left side)", the CPU 101 determines that the specification of the tracking target of the sub camera 400 does not indicates the tracking target of the main camera 500 and executes step S604.

In S603, the CPU 101 determines to control the image capturing direction of the sub camera 400 so as to track the tracking target (target subject) of the main camera 500.

In S604, the CPU 101 determines to control the image capturing direction of the sub camera 400 to track, among the subjects different from the target subject of the main camera 500, a subject on the left.

In S605, the CPU 101 determines whether the specification of zoom control for the sub camera 400 included in the control details CAMERA_ROLE indicates in-phase control of the subject size between the target subject of the main camera 500 and the tracking target of the sub camera. For example, when the specification of size control of the tracking target of the sub camera 400 has a value indicating "in phase with the main", the CPU 101 determines that the specification of zoom control of the sub camera 400 indicates control in phase with the main camera 500 and executes step S606. In contrast, when the specification of size control of the tracking target of the sub camera 400 has a value indicating "opposite phase with the main", the CPU 101 determines that the specification of zoom control of the sub camera 400 does not indicate control in phase with the main camera 500 and executes step S607.

In S606, the CPU 101 determines to control the zoom control value (angle of view) of the sub camera 400 to change in size in phase with the tracking target of the main camera 500.

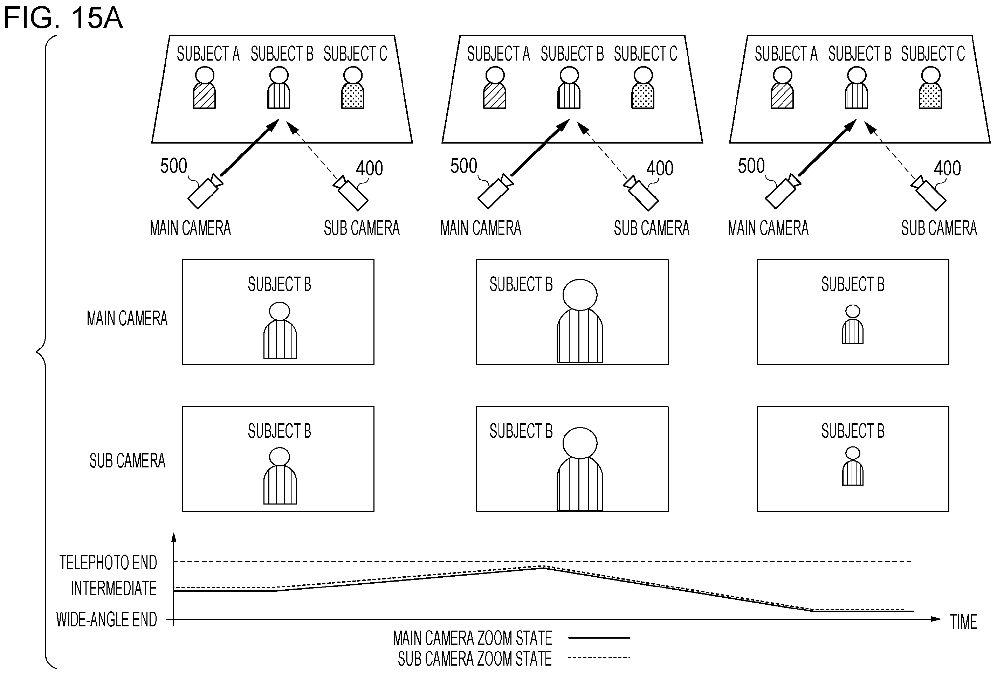

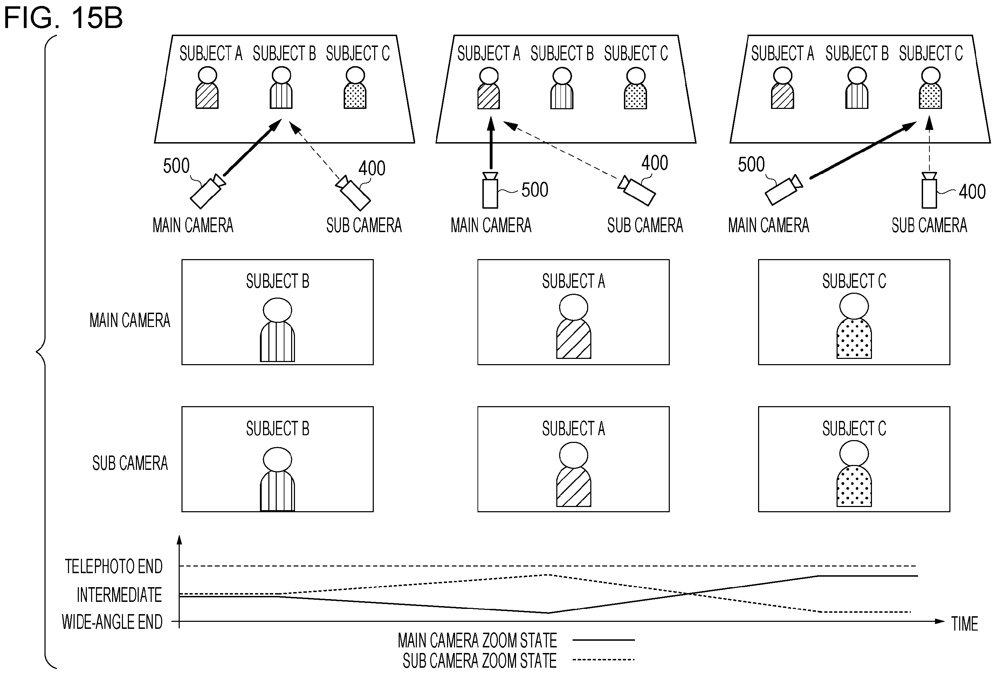

Referring to Figs. 15A and 15B, an example will be described in which the role assigned to the sub camera 400 is "main follow". Figs. 15A and 15B schematically illustrate how the image-capturing control apparatus 100 controls the image capturing direction and the angle of view of the sub camera 400 when the target subject and the angle of view of the main camera 500 change with time during image capturing. In the diagrams, the time proceeds from left to right. In Figs. 15A and 15B, the zoom state is represented in three stages: "telephoto end", "intermediate", and "wide-angle end". This is because the range of the zoom control value can vary between the sub camera 400 and the main camera 500 as illustrated in Figs. 13A to 13C. The "telephoto end" corresponds to a state in which the camera zooms-in to the telephoto end, "wide-angle end" corresponds to a state in which the camera zooms-out to the wide-angle end, and "intermediate" corresponds to a zoom state between the telephoto end and the wide-angle end; however, the actual zoom control value may differ between the sub camera 400 and the main camera 500. For example, when the zoom state is "telephoto end", the zoom control value of the main camera 500 is main_min, and the zoom control value of the sub camera 400 is sub_min.

First, a process for controlling the zoom state while capturing the same the subject B with the main camera 500 and the sub camera 400 will be described with reference to Fig. 15A.

At first, the target subject (tracking target) of the main camera 500 is the subject B, and its zoom state is "intermediate". Accordingly, the CPU 101 determines the subject B as the tracking target of the sub camera 400 and controls the image capturing direction so that the sub camera 400 tracks the subject B. The CPU 101 also controls the sub camera 400 so that the size of its tracking target becomes equal to the size of the target subject of the main camera 500. In the case of Fig. 15A, the CPU 101 controls the zoom state to "intermediate".

Thereafter, the zoom state of the main camera 500 is changed from "intermediate" to "telephoto end", with the target subject of the main camera 500 kept as the subject B. As a result, the size of the subject B within the field of view of the main camera 500 becomes larger than that before the zoom state is changed.

In response to it, the CPU 101 controls the zoom state of the sub camera 400 from "intermediate" to "telephoto end" while keeping the tracking target of the sub camera 400 as the subject B. As a result, the size of the subject B within the field of view of the sub camera 400 becomes larger than that before the zoom state is changed, and becomes equal to the size of the subject B captured by the main camera 500.

Thereafter, the zoom state of the main camera 500 is changed from "telephoto end" to "wide-angle end", with the target subject of the main camera 500 kept as the subject B. In response to it, the CPU 101 controls the zoom state of the sub camera 400 from "telephoto end" to "wide-angle end" while keeping the tracking target of the sub camera 400 as the subject B. As a result, the size of the subject B within the field of view of the sub camera 400 becomes smaller than that before the zoom state is changed, and becomes equal to the size of the subject B captured by the main camera 500.

Such control allows the target subject of the main camera 500 and the tracking target of the sub camera 400 to be captured in equal size.

Referring next to Fig. 15B, an example in which, while both the main camera 500 and the sub camera 400 capturing images of the subject B, the subject A, and the subject C in sequence, their zoom states are controlled so that the sizes of the subject B, the subject A, and the subject C become equal.

At first, the target subject (tracking target) of the main camera 500 is the subject B, and its zoom state is "intermediate". Then, the CPU 101 determines the subject B as the tracking target of the sub camera 400 and controls the image capturing direction of the sub camera 400 to track the subject B. The CPU 101 also controls the sub camera 400 so that the size of its tracking target becomes equal to the size of the target subject of the main camera 500. In the case of Fig. 15B, the CPU 101 controls the zoom state to "intermediate".

Thereafter, the target subject of the main camera 500 is changed from the subject B to the subject A. "telephoto end" with the target subject of the main camera 500 kept as the subject B. When the target subject is changed from the subject B to the subject A, the zoom state of the main camera 500 is changed from "intermediate" to "wide-angle end" to make the size of the subject to be captured unchanged.

In response to it, the CPU 101 changes the tracking target of the sub camera 400 to the subject A.

At this time, since the distance from the sub camera 400 to the subject A is larger than that to the subject B, the size of the subject to be captured becomes smaller in the current zoom state. For this reason, the CPU 101 controls the zoom state of the sub camera 400 to change from "intermediate" to "telephoto end" to make the subject size equal to the size of the subject captured by the main camera 500. As a result, by controlling the size of the subject A within the field of view of the sub camera 400 to become larger than that before the zoom state is changed, the size of the subject A captured by the sub camera 400 can be made equal to the size of the subject A captured by the main camera 500.

Next, the target subject of the main camera 500 is changed from the subject A to the subject C. When the target subject is changed from the subject A to the subject C, the zoom state of the main camera 500 is changed from "wide-angle end" to "telephoto end" to make the size of the subject to be captured unchanged.

In response to it, the CPU 101 changes the tracking target of the sub camera 400 to the subject C.

At this time, since the distance from the sub camera 400 to the subject C is smaller than that to the subject C, the size of the subject to be captured becomes larger in the current zoom state. For this reason, the CPU 101 controls the zoom state of the sub camera 400 to change from "telephoto end" to "wide-angle end" to make the subject size equal to the size of the subject captured by the main camera 500. As a result, by controlling the size of the subject C within the field of view of the sub camera 400 to become smaller than that before the zoom state is changed, the size of the subject C captured by the sub camera 400 can be made equal to the size of the subject C captured by the main camera 500.

Such control allows the target subject of the main camera 500 and the tracking target of the sub camera 400 to be captured in equal size.

Thus, in the case where the role of the sub camera 400 is "main follow", the CPU 101 automatically changes the tracking target and the zoom control value of the sub camera 400 so as to follow changes in the target subject and the angle of view (zoom control value )of the main camera 500.

In the example illustrated in Fig. 15A, the zoom state of the sub camera 400 is controlled to change by the same degree as that of the tracking target of the main camera 500. This is a mere example; the actual zoom control value may differ as long as zoom control is performed so that the size changes in phase with the tracking target of the main camera 500. For example, the zoom state of the sub camera 400 does not have to be at the telephoto end even when the zoom state of the main camera 500 is at the telephoto end. Whether the zoom control value of the sub camera 400 is to be matched to the zoom control value of the main camera 500 may be configured using role setting information.

In the examples illustrated in Figs. 15A and 15B, although the zoom state of the sub camera 400 is controlled in an analog manner so that the sizes of the subject captured by the main camera 500 and the subject captured by the sub camera 400 become equal, the zoom state may be controlled in a digital manner. For example, the control may be performed such that the size of the captured subject becomes a predetermined size, such as a full body shot, a waist shot, or a bust shot. Such control allows automatic control of the angle of view based on the composition. Whether the zoom state of the sub camera 400 is to be matched to the zoom state of the main camera 500 may be configured using role setting information.

In S607, the CPU 101 determines to control the zoom control value (angle of view) of the sub camera 400 such that the size of the tracking target changes in opposite phase to that of the tracking target of the main camera 500.

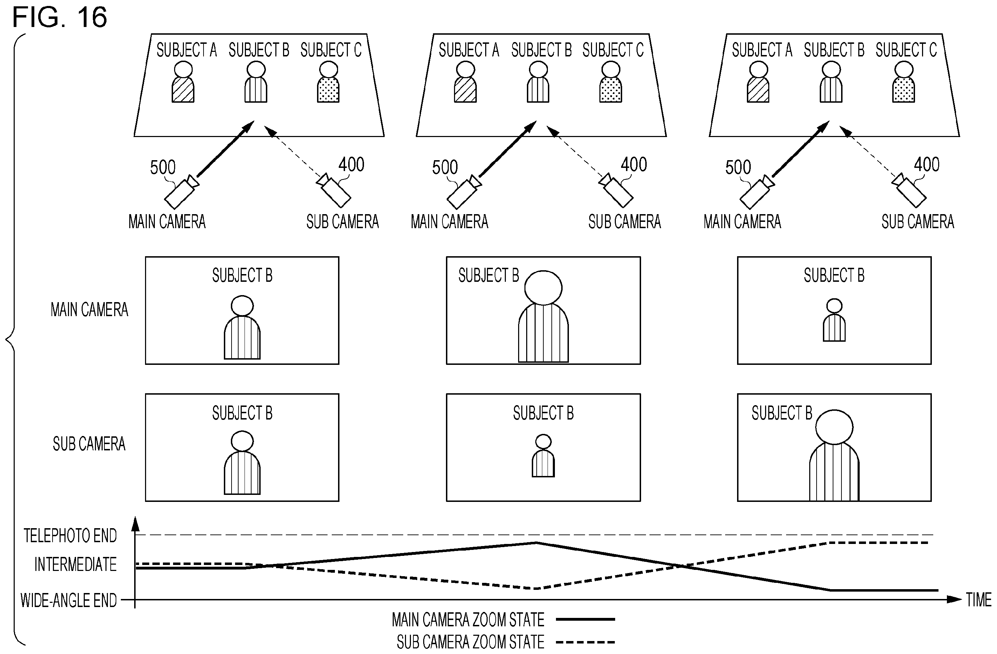

An example of sub camera control when the role assigned to the sub camera 400 is "main counter" will be described with reference to Fig. 16. First, a process of controlling the zoom states of the main camera 500 and the sub camera 400 while capturing the same the subject B will be described with reference to Fig. 16.

At first, the target subject (tracking target) of the main camera 500 is the subject B, and the zoom state is "intermediate". Therefore, the CPU 101 determines the subject B as the tracking target of the sub camera 400, and controls the image capturing direction of the sub camera 400 to track the subject B. The CPU 101 performs control such that the size of the tracking target of the sub camera 400 varies in opposite phase to that of the tracking target of the main camera 500. In the case of Fig. 16, since the zoom state of the main camera 500 is "intermediate", the CPU 101 controls the zoom state of the sub camera 400 to "intermediate".

Thereafter, the zoom state of the main camera 500 is changed from "intermediate" to "telephoto end", with the target subject of the main camera 500 kept as the subject B. As a result, the size of the subject B within the field of view of the main camera 500 becomes larger than that before the zoom state is changed.

In response to it, the CPU 101 controls the zoom state from "intermediate" to "wide-angle end" to control the zoom state of the sub camera 400 in opposite phase while keeping the tracking target of sub camera 400 as the subject B. As a result, the size of the subject B within the field of view of the sub camera 400 becomes smaller than that before the zoom state is changed, and the subject B is captured in a size different from that captured by the main camera 500.

Thereafter, the zoom state of the main camera 500 is changed from "telephoto end" to "wide-angle end", with the target subject of the main camera 500 kept as the subject B. In response to it, the CPU 101 controls the zoom state of the sub camera 400 from "wide-angle end" to "telephoto end" to control the zoom state of the sub camera 400 in opposite phase while keeping the tracking target of the sub camera 400 as the subject B. As a result, the size of the subject B within the field of view of the sub camera 400 becomes larger than that before the zoom state is changed, and the subject B is captured in a size different from that captured by the main camera 500.

Such control enables the target subject of the main camera 500 and the tracking target of the sub camera 400 to be captured in different sizes. The subject size of the sub camera 400 relative to the subject size of the main camera 500 may be set using role setting information.

Thus, in the case where the role of the sub camera 400 is "main counter", the CPU 101 automatically changes the tracking target of the sub camera 400, based on its relationship to the target subject of the main camera 500, in response to a change in the target subject of the main camera 500. The CPU 101 also automatically changes the zoom control value of the sub camera 400 in the opposite direction from a change in the angle of view (zoom control value) of the main camera 500.

In the example illustrated in Fig. 16, the CPU 101 controls the zoom state of the sub camera 400 so as to change by the same degree as that of the main camera 500; however, when the direction of change in the zoom control value is in opposite phase, the amount of change in the zoom control value may differ. For example, the zoom state of the sub camera 400 does not necessarily have to be at the wide-angle end when the zoom state of the main camera 500 is at the telephoto end. The degree of change in the zoom state of the sub camera 400 relative to the degree of change in the zoom state of the main camera 500 may be configurable using role setting information.

Although the embodiment shows an example in which the roles of the sub camera 400 are "main follow" and "main counter" for capturing the same subject as that of the main camera 500, the disclosure also applies to any other roles. For example, when the role is "assist follow", the sub camera 400 tracks a subject different from the target subject of the main camera 500, and its zoom state is controlled in phase with respect to the subject size. In this case, the CPU 101 may control the zoom state in the same manner as described in Fig. 15B. When the role is "assist counter", the sub camera 400 tracks a subject different from the target subject of the main camera 500, and its zoom state is controlled in opposite phase with respect to the subject size. In this case, the CPU 101 may control the zoom state in the same manner as described in Fig. 16.

Modification 1

Thus far, examples have been described in which the tracking target and the zoom control value of the sub camera 400 are automatically controlled based on the target subject and the zoom control value of the main camera 500. In the above examples, the sub camera 400 is automatically controlled so as to track a single subject; however, the sub camera 400 may also be automatically controlled so as to track a plurality of subjects within an image capture range.

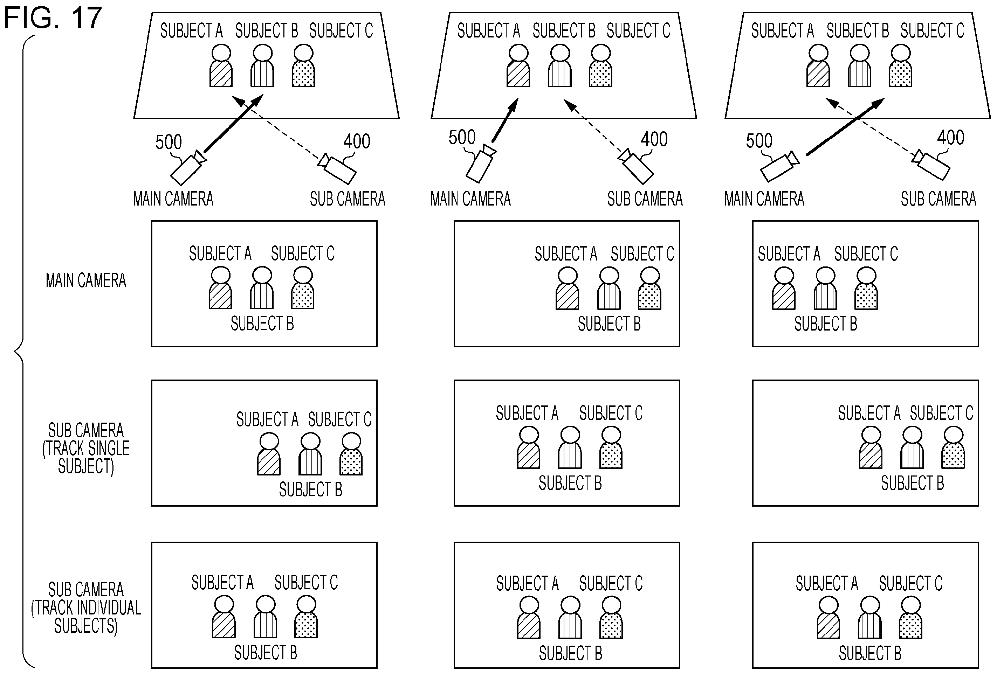

An example in which a single subject is tracked by the sub camera 400 and an example in which a plurality of subjects is tracked by the sub camera 400 when the role assigned to the sub camera 400 is "assist follow" will be described with reference to Fig. 17. Here, for ease of understanding and explanation, a case where the angle of view of the main camera 500 does not change, and only control of the tracking target is executed will be described. The angle of view of the sub camera 400 allows all the subjects within the image capture range 20 to be always captured. The image capturing direction of the sub camera 400 illustrated at the top in Fig. 17 indicates an image capturing direction when a single subject is tracked.

As in Fig. 16, at first, the target subject (tracking target) of the main camera 500 is the subject B. Therefore, the CPU 101 determines the subject A on the left, among the subjects A and C other than the subject B, as the tracking target of the sub camera 400 and controls the image capturing direction of the sub camera 400 to track the subject A. When the image capturing direction is controlled such that the tracking target is located at the center of the screen, the image captured by the sub camera 400, as illustrated in the second row from the bottom, becomes unbalanced, with the subjects A to C shifted to the right. For this reason, when the image captured by the sub camera 400 includes a plurality of subjects including the tracking target, the image capturing direction may be controlled so as to track the plurality of subjects. For example, the CPU 101 may control the image capturing direction so as to track the centers of gravity of the plurality of subjects A to C included in the image captured by the sub camera 400. As a result, the image as illustrated in the bottom row can be captured by the sub camera 400.

In the example illustrated in Fig. 17, even if the sub camera 400 tracks any of subjects A to C, all of the subject A to C are captured, and therefore, even if the target subject of the main camera 500 changes, the image capturing direction of the sub camera 400 is kept substantially constant.

Modification 2

After determining the tracking target of the sub camera 400, the CPU 101 may control the sub camera 400 so as to focus on the tracking target. Basically, the CPU 401 continuously controls the focal length of the sub camera 400 so as to focus on the designated tracking target; however, the autofocus (AF) frame of the sub camera 400 may be set to the position of the tracking target by the image-capturing control apparatus 100. This enables the sub camera 400 to focus on the tracking target quickly and reliably. When an AF frame is set at the time the panning speed becomes low (equal to or loser than a threshold), the tracking target is highly likely to be located at the center of the screen, and thus, the time required for focusing may be reduced.

Modification 3

The sub camera 400 can be controlled even without using the bird's-eye camera 300. In this case, the image capturing direction of the sub camera 400 can be determined based on the installation positions of the main camera 500 and the sub camera 400 and the image capturing direction of the main camera 500 (the orientation of the main camera 500 with respect to the tracking target). By executing a subject detection process with the main camera 500, and by the CPU 101 acquiring the result and using it, the sub camera 400 can be controlled. For example, the CPU 101 acquires, as a result of the subject detection process, an image of the subject region from the main camera 500. The CPU 101 can control the sub camera 400 so as to execute a subject tracking process using the acquired image as a template. Alternatively, the CPU 101 may use the acquired image as a template and control the sub camera 400 so as to track a subject region with a low degree of correlation with the template.

Modification 4

Having described the image-capturing control apparatus 100 and the role control apparatus 600 as apparatuses independent of the main camera 500, the functions of the image-capturing control apparatus 100 and the role control apparatus 600 may be incorporated in the main camera 500. In this case, a video captured by the bird's-eye camera 300 is supplied to the main camera 500. Such a configuration allows for a reduction in the number of devices necessary for implementing a multi-camera image capturing system.

As has been described above, according to this embodiment, the operation of the sub camera is automatically controlled based on the state of the main camera and a video captured by the main camera, in accordance with a role assigned to the sub camera. This enables the image-capturing control apparatus according to this embodiment to achieve automatic image capturing control with higher flexibility while realizing labor saving.

Second Embodiment

Next, a second embodiment of the present disclosure will be described. In this embodiment, the tracking target of the sub camera is determined in consideration of information based on a video captured by the sub camera, in addition to the state or the main camera or a video captured by the main camera and a role assigned to the sub camera.

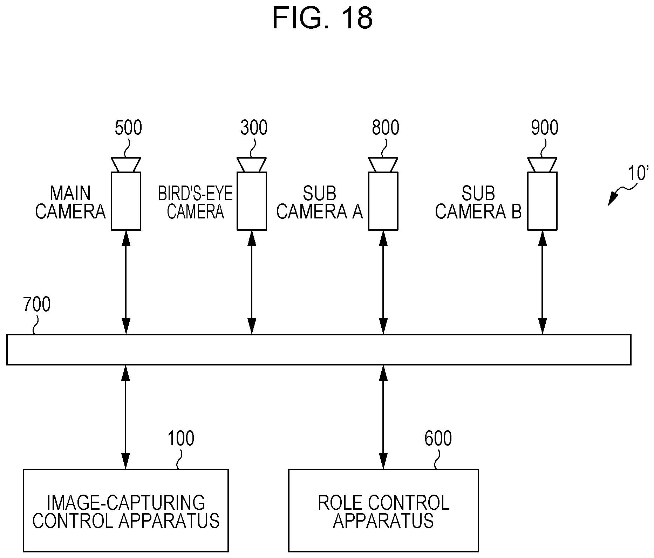

Fig. 18 is a schematic diagram illustrating an example of the configuration of an image capturing system 10' according to this embodiment. In Fig. 18, components having the same configurations as those of the image capturing system 10 according to the first embodiment are denoted by the same reference signs as in Fig. 1, and descriptions thereof will be omitted. The image capturing system 10' of this embodiment includes two sub cameras A 800 and B 900. Since the functional configurations of the sub camera A 800 and the sub camera B 900 are the same as those of the sub camera 400 described in the first embodiment, descriptions thereof will be omitted.

In this embodiment, the roles are set to the image-capturing control apparatus 100 from the role control apparatus 600, and the role setting information includes control details that differ for each sub camera. The CPU 101 controls the operation for each sub camera in accordance with a role set in the image-capturing control apparatus 100.

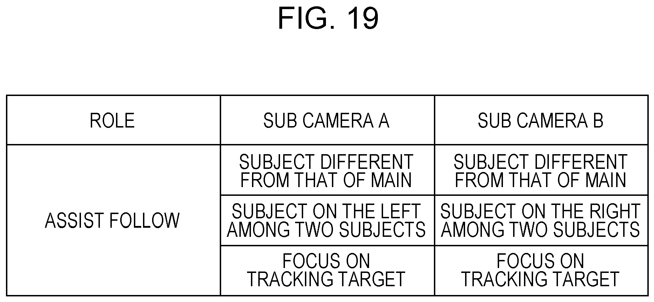

Fig. 19 is a diagram illustrating examples of role setting information according to this embodiment. Here, only control details corresponding to role "assist follow" for each sub camera as one example. However, the types of roles that can be set in the image-capturing control apparatus 100 and control details corresponding to the types of roles are not limited to the example illustrated in Fig. 19.

Here, for the sub camera A 800, among subjects different from the tracking target of the main camera 500, a subject on the left is to be set as a tracking target, and control is performed so as to focus on the tracking target. For the sub camera B 900, among subjects different from the tracking target of the main camera 500, a subject on the right is to be set as a tracking target, and control is performed so as to focus on the tracking target. In this case, since it is known in advance that the total number of subjects is three, "subject on the left (or right) among two subjects" is specified; however, simply "on the left (or right)" may be specified. Although zoom control may be defined, as in the first embodiment, zoom control will be omitted here for simplification of explanation.

The role setting information illustrated in Fig. 19 is stored in advance in the ROM 103 of the image-capturing control apparatus 100. Alternatively, the role setting information may be supplied from the role control apparatus 600 to the image-capturing control apparatus 100 and may be stored in the RAM 102 by the CPU 101.

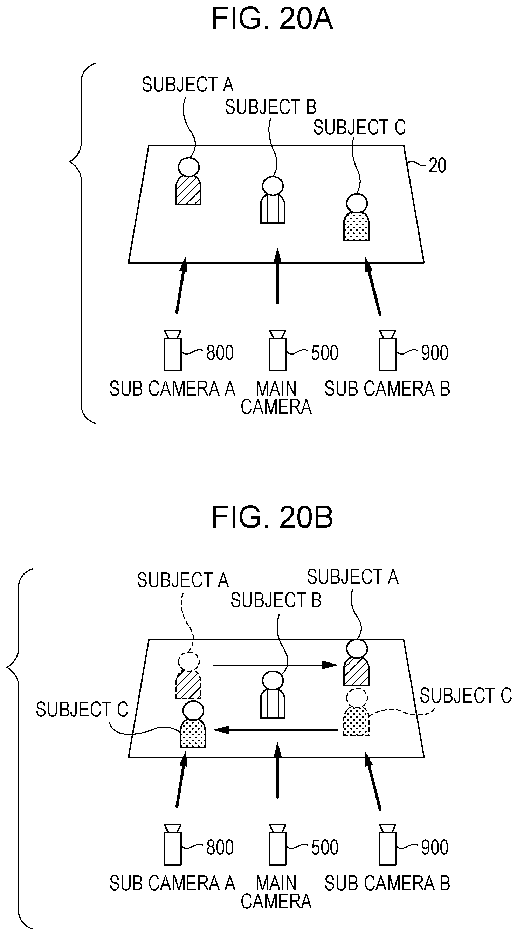

Referring to Figs. 20A and 20B, how the image-capturing control apparatus 100 controls the sub camera A 800 and the sub camera B 900 based on the role setting information will be described.

Fig. 20A illustrates the image capture range 20, the positional relationship among the main camera 500, the sub camera A 800, and the sub camera B 900, and subjects A to C within the image capture range 20 at the start of image capturing. Fig. 20B illustrates a state in which after the start of image capturing, the subject A has moved from the left to right of the subject B, and the subject C has moved from the right to left of the subject B.

At the time in Fig. 20A, the CPU 101 of the image-capturing control apparatus 100 controls the operations of the sub camera A 800 and the sub camera B 900 based on the role setting information illustrated in Fig. 19. In other words, the CPU 101 determines, among the subjects A and C other than the target subject (the subject B) of the main camera 500, the subject A on the left as the tracking target of the sub camera A 800, and the subject C on the right as the tracking target of the sub camera B 900.

The CPU 101 controls the image capturing directions of the sub camera A 800 and the sub camera B 900 so as to track the determined tracking targets. The CPU 101 controls the sub camera A 800 and the sub camera B 900 so as to focus on the determined tracking targets.

When the state illustrated in Fig. 20B is reached, the subject A that the sub camera A 800 tracks does not satisfy the condition "a subject on the left" (other than the target subject of the main camera 500). The CPU 101 therefore changes the tracking target of the sub camera A 800 to the subject C on the left among the subjects A and C other than the target subject (the subject B) of the main camera 500. Similarly, the subject C that the sub camera B 900 tracks does not satisfy the condition "a subject on the right". The CPU 101 therefore changes the tracking target of the sub camera B 900 to the subject A on the right among the subjects A and C other than the target subject (the subject B) of the main camera 500. The CPU 101 controls the sub camera A 800 and the sub camera B 900 so as to focus on the determined respective tracking targets.

When the subject has moved significantly as illustrated in Fig. 20B, there is a high likelihood that another subject is present in the foreground, and therefore, the tracking target subject is likely to be hidden. By setting a sub camera disposed on the left with respect to the image capture range 20 to track a subject on the left, when the tracking target has significantly moved to the right, the tracking target of the sub camera can be effectively changed. This also applies to a sub camera disposed on the right with respect to the image capture range 20.

**In** this embodiment, control details are defined such that each sub camera that is assigned the same role tracks a different subject. This enables the image-capturing control apparatus 100 according to this embodiment to automatically control the sub cameras so as to capture videos in which various subjects are tracked based on information acquired from the state of the main camera and a video captured by the main camera.

Modification 1

**In** this embodiment, the image capturing direction of a sub camera for tracking a specific subject is estimated by converting the position of a subject region detected from a video captured by the bird's-eye camera 300 to coordinates. However, the same estimation may be performed based on videos captured by the sub camera A 800 and the sub camera B 900. In this case, although the processing load on the image-capturing control apparatus 100 increases, coordinate conversion is not required, whereby improving the accuracy of control of the image capturing directions of the sub cameras A 800 and B 900.

Modification 2

**In** this embodiment, the pan angles/tilt angles for controlling the sub camera A 800 and the sub camera B 900 are calculated so as to automatically track the tracking target. However, automatic tracking is not required. For example, the role setting information may be defined such that the pan angles of the sub camera A 800 and the sub camera B 900 are controlled in accordance with the zoom control value of the main camera 500.

In one example, when the zoom state of the main camera 500 is "wide-angle end", the sub camera A 800 may be controlled to face a direction 45 degrees to the left, and the sub camera B 900 may be controlled to face a direction 45 degrees to the right. In contrast, when the zoom state of the main camera 500 is "telephoto end", both the sub camera A 800 and the sub camera B 900 may be controlled to face the central 0-degree direction.

Such control enables the image capturing directions of a plurality of sub cameras to be controlled in synchronization with the zoom state of the main camera 500, thereby enhancing a visual effect. For example, as the main camera 500 zooms in on a specific subject, the sub camera A 800 and the sub camera B 900 can also change their image capturing directions while zooming in the same subject in coordination with the main camera 500. Such control enables a plurality of images captured by a plurality of synchronously controlled cameras to be simultaneously viewed in a presentation in which images captured by a plurality of cameras are displayed across multiple monitors. Furthermore, by assigning the same role to individual cameras and automatically controlling them, variations in the temporal change of the angles of view among the cameras is reduced, as compared with a case where the individual cameras are manually operated, resulting in a stronger sense of unity in a change in angles of view and providing a visual effect that enhances a sense of realism.

Modification 3

Although this embodiment shows an example in which the main camera 500 is controlled as the primary and the sub camera A 800 and the sub camera B 900 are controlled as the secondary, the primary-secondary relationship between the main camera 500 and the sub camera A 800 may be dynamically changeable. For example, among the main camera 500, the sub camera A 800, and the sub camera B 900, a camera that captures a main video may be controlled as the primary, and the other cameras may be controlled as the secondary. In this case, the image-capturing control apparatus 100 only needs to acquire information indicating which camera's video is selected as the main video from an external device, such as a switcher for selecting a video, or to determine the information based on a tally signal. Similar control may also be performed not only when the main video is selected, but also when a video related to viewing or recording by a viewer, such as a video for recording, is selected.

Furthermore, the primary-secondary relationship between the cameras may be switched when the sub camera A 800 or the sub camera B 900 is manually operated. In this case, when one of the sub cameras A 800 and B 900 is manually operated by the user, the other sub camera is controlled, with the operated camera regraded as the primary, thereby enhancing operability.

Other Embodiments

Embodiments of the present disclosure can also be realized by one or more processors of a computer of a system or apparatus that reads out and executes computer executable instructions recorded on a storage medium to perform the functions of one or more of the above-described embodiments and/or that includes one or more circuits (e.g., application specific integrated circuit (ASIC)) for performing the functions of one or more of the above-described embodiments.

According to an embodiment of the present disclosure, an image-capturing control apparatus and an image-capturing control method configured to enable a sub camera to perform image capturing at an intended angle of view, when automatically controlling image capturing by the sub camera in coordination with a main camera.

Various embodiments have been described in detail above but it will be understood that the present disclosure is not limited to these embodiments and encompasses all modifications, variants, alternatives and equivalents falling within the scope of the appended claims.

## Claims

**1.** An image-capturing control apparatus (100) comprising:

an acquisition unit (101), configured to acquire information from a state of a main camera (500) and/or from a video captured by the main camera, among a plurality of cameras; and
a control unit (101) configured to control an operation of a sub camera (400) among the plurality of cameras based on a role assigned to the sub camera and the information,
wherein the acquisition unit is configured to acquire, as the information, information on an angle of view of the main camera, information on a distance between the main camera and a target subject of the main camera, and information on a distance between the sub camera and a tracking target of the sub camera, and
wherein the control unit is configured to control an angle of view of the sub camera based on the role assigned to the sub camera and the information.

2. The image-capturing control apparatus according to claim 1, wherein the control unit is configured to determine the target subject or a subject different from the target subject as the tracking target of the sub camera in accordance with the role assigned to the sub camera.

3. The image-capturing control apparatus according to claim 2, wherein the control unit is configured to control the sub camera so as to track a plurality of subjects including the tracking target.

4. The image-capturing control apparatus according to any one of the preceding claims, wherein, in a case where the sub camera comprises a plurality of sub cameras, the control unit is configured to determine different tracking targets for the plurality of sub cameras.

5. The image-capturing control apparatus according to any one of the preceding claims, wherein primary-secondary relationship between the main camera and the sub camera is dynamically switchable.

6. The image-capturing control apparatus according to claim 5, wherein the primary-secondary relationship between the main camera and the sub camera is switched when the sub camera is manually operated.

7. The image-capturing control apparatus according to claim 5 or 6, wherein, among the plurality of cameras, a camera whose video is selected by an external device is used as the main camera.

8. The image-capturing control apparatus according to any one of the preceding claims, wherein the control unit is configured to determine an image capturing direction of the sub camera based on a video captured by a camera different from the cameras in the plurality of cameras, the camera being configured to capture an entire image capture range of the plurality of cameras.

9. The image-capturing control apparatus according to any one of the preceding claims, wherein the sub camera allows controlling of pan and tilt operations from outside.

10. The image-capturing control apparatus according to any one of the preceding claims, wherein the control unit is configured to control the angle of view of the sub camera in phase or opposite phase with a change in the angle of view of the main camera, in accordance with the role assigned to the sub camera.

11. The image-capturing control apparatus according to any one of the preceding claims, comprising at least one processor and/or circuit configured to function at least as the acquisition unit (101) and control unit (101).

12. An image capturing system (10) comprising:

the image-capturing control apparatus (100) according to any one of claims 1 to 11;
the plurality of cameras; and
a communication network (700) configured to communicably connect the image-capturing control apparatus and the plurality of cameras.

13. An image-capturing control method, the method comprising:

acquiring information from a state of a main camera (500) and/or from a video captured by the main camera, among a plurality of cameras; and
controlling an operation of a sub camera (400) among the plurality of cameras based on a role assigned to the sub camera and the information,

wherein the acquiring includes: acquiring, as the information, information on an angle of view of the main camera, information on a distance between the main camera and a target subject of the main camera, and information on a distance between the sub camera and a tracking target of the sub camera, and
wherein the controlling includes:
controlling an angle of view of the sub camera based on the role assigned to the sub camera and the information.

**14.** A computer program comprising instructions which, when the program is executed by a computer, cause the computer to carry out the method of claim 13.

**15.** A computer-readable storage medium (103, 303, 403, 503, 603) having stored thereon the computer program of claim 14.

FIG. 1

500
300
400
10
MAIN CAMERA
BIRD'S-EYE CAMERA
SUB CAMERA
700
100
600
IMAGE-CAPTURING CONTROL APPARATUS
ROLE CONTROL APPARATUS

FIG. 2
100
IMAGE-CAPTURING CONTROL APPARATUS
101
CPU
102
RAM
103
ROM
104
INFERENCE UNIT
110
107
VIDEO INPUT UNIT
106
USER INPUT UNIT
108
DISPLAY UNIT
105
NETWORK I/F
500
MAIN CAMERA
501
CPU
502
RAM
503
ROM
510
509
DRIVE UNIT
508
DRIVE I/F
507
IMAGE SENSOR
506
IMAGE PROCESSING UNIT
505
NETWORK I/F
700
300
BIRD'S-EYE CAMERA
301
CPU
302
RAM
303
ROM
305
NETWORK I/F
307
IMAGE SENSOR
306
IMAGE PROCESSING UNIT
310
400
SUB CAMERA
401
CPU
402
RAM
403
ROM
405
NETWORK I/F
410
409
DRIVE UNIT
408
DRIVE I/F
407
IMAGE SENSOR
406
IMAGE PROCESSING UNIT
600
ROLE CONTROL APPARATUS
601
CPU
605
NETWORK I/F
608
DISPLAY UNIT
602
RAM
603
ROM
611
USER INPUT UNIT

FIG. 3
100
IMAGE-CAPTURING CONTROL APPARATUS
121
RECOGNITION UNIT
122
TARGET-SUBJECT DETERMINATION UNIT
120
ROLE DETERMINATION UNIT
123
TRACKING-TARGET DETERMINATION UNIT
124
PAN/TILT VALUE CALCULATION UNIT
125
ZOOM-VALUE CALCULATION UNIT
300
BIRD'S-EYE CAMERA
500
MAIN CAMERA
600
ROLE CONTROL APPARATUS
400
SUB CAMERA
IMG
ANGLE
REF_POSI
ROLE
POSITION [i]
MAIN_SUBJECT
CAMERA_ROLE
MAIN_ZOOM
SUBJECT_ID
PT_VALUE
Z_VALUE

FIG. 4

| ROLE | CONTROL OF SUB CAMERA | |
|---|---|---|
| | TRACKING TARGET | ZOOM |
| MAIN FOLLOW | SAME AS MAIN | IN PHASE WITH SUBJECT SIZE OF MAIN CAMERA |
| MAIN COUNTER | SAME AS MAIN | OPPOSITE PHASE WITH SUBJECT SIZE OF MAIN CAMERA |
| ASSIST FOLLOW | DIFFERENT FROM MAIN (ON THE LEFT) | IN PHASE WITH SUBJECT SIZE OF MAIN CAMERA |
| ASSIST COUNTER | DIFFERENT FROM MAIN (ON THE LEFT) | OPPOSITE PHASE WITH SUBJECT SIZE OF MAIN CAMERA |

FIG. 5

ROLE DETERMINATION PROCESS
ACQUIRE ROLE CORRESPONDING TO SUB CAMERA 400 FROM ROLE CONTROL APPARATUS 600
S101
TRANSMIT ROLE OF SUB CAMERA 400 TO TRACKING-TARGET DETERMINATION UNIT 123
S103
TRANSMIT ROLE OF SUB CAMERA 400 TO ZOOM-VALUE CALCULATION UNIT 125
S104
END

FIG. 6A
START
ACQUIRE IMAGE CAPTURED BY BIRD'S-EYE CAMERA 300
S201
ACQUIRE IMAGE-CAPTURING DIRECTION OF MAIN CAMERA 500
S202
DETECT SUBJECT FROM IMAGE CAPTURED BY BIRD'S-EYE CAMERA 300
S203
DETERMINE TARGET SUBJECT OF MAIN CAMERA 500
S204
ACQUIRE CONTROL DETAILS CORRESPONDING TO ROLE OF SUB CAMERA 400
S205
DETERMINE TRACKING TARGET OF SUB CAMERA 400
S206
CALCULATE DISTANCE BETWEEN TARGET SUBJECT OF MAIN CAMERA AND POSITION OF MAIN CAMERA
S207
CALCULATE DISTANCE BETWEEN TRACKING TARGET OF SUB CAMERA AND POSITION OF SUB CAMERA
S208
CALCULATE PTZ VALUES OF SUB CAMERA 400 AND TRANSMIT CONTROL COMMAND
S209
END

FIG. 6B
BIRD'S-EYE CAMERA
RECEIVE IMAGE CAPTURING COMMAND
S301
IMAGE CAPTURING PROCESS
S302
TRANSMIT CAPTURED VIDEO
S303
END
FIG. 6C
MAIN CAMERA
RECEIVE IMAGE-CAPTURING-DIRECTION ACQUISITION COMMAND
S501
IMAGE-CAPTURING-DIRECTION ACQUISITION PROCESS
S502
TRANSMIT INFORMATION ON IMAGE-CAPTURING-DIRECTION
S503
END
FIG. 6D
SUB CAMERA
RECEIVE IMAGE CAPTURING COMMAND
S401
READ OPERATING DIRECTION AND OPERATING AMOUNT (VECTOR QUANTITY) FROM CONTROL COMMAND
S402
DERIVE DRIVE PARAMETERS FROM READ VALUES
S403
CONTROL DRIVE UNIT BASED ON DERIVED DRIVE PARAMETERS
S404
END

FIG. 7A

Mark_A
HORIZONTAL DIRECTION
(x0, y0)
SUBJECT B
(x1, y1)
Mark_B
(x2, y2)
SUBJECT A
SUBJECT C
(x3, y3)
Mark_C
20
Mark_D
VERTICAL DIRECTION

FIG. 7B

Mark_A
Mark_B
HORIZONTAL DIRECTION
COORDINATES (0, 0)
(X0, Y0)
(X1, Y1)
SUBJECT A
SUBJECT B
SUBJECT C
20
Mark_C
(X2, Y2)
(X3, Y3)
Mark_D
20
VERTICAL DIRECTION

FIG. 8A

SUBJECT A
SUBJECT B
SUBJECT C
HORIZONTAL DIRECTION
DETECTED RECTANGLE
FOOT COORDINATES (xa, ya)
FOOT COORDINATES (xb, yb)
FOOT COORDINATES (xc, yc)
VERTICAL DIRECTION

FIG. 8B

COORDINATES (0, 0)
HORIZONTAL DIRECTION
SUBJECT A
SUBJECT B
SUBJECT C
FOOT COORDINATES (XA, YA)
FOOT COORDINATES (XB, YB)
FOOT COORDINATES (XC, YC)
VERTICAL DIRECTION
500
300
400
MAIN CAMERA
BIRD'S-EYE CAMERA
SUB CAMERA
MAIN CAMERA COORDINATES (XM, YM)
SUB CAMERA COORDINATES (XS, YS)

FIG. 9A
SUBJECT A
SUBJECT B
SUBJECT C
500
MAIN CAMERA
400
SUB CAMERA
FIG. 9B
SUBJECT A
SUBJECT B
SUBJECT C
500
MAIN CAMERA
400
SUB CAMERA
FIG. 9C
SUBJECT A
SUBJECT B
SUBJECT C
500
MAIN CAMERA
400
SUB CAMERA

SUBJECT A
SUBJECT B
SUBJECT C
500
400
MAIN CAMERA
SUB CAMERA
SUBJECT A
SUBJECT B
SUBJECT C
500
400
MAIN CAMERA
SUB CAMERA
SUBJECT A
SUBJECT B
SUBJECT C
500
400
MAIN CAMERA
SUB CAMERA

FIG. 10A

FIG. 10B

FIG. 10C

# FIG. 11

HORIZONTAL DIRECTION
TRACKING TARGET (SUBJECT_ID)
CURRENT OPTICAL AXIS DIRECTION
(px, py)
TARGET OPTICAL AXIS DIRECTION
θ
SUB CAMERA
(subx, suby)
VERTICAL DIRECTION

# FIG. 12

TRACKING TARGET (SUBJECT_ID)
TARGET OPTICAL AXIS DIRECTION
SUB CAMERA
400
ρ
CURRENT OPTICAL AXIS DIRECTION
HEIGHT h2
HEIGHT h1
DISTANCE L

FIG. 13A
WIDE ANGLE
(MAIN CAMERA)
Main_max
Main_zoom
Main_min
(SUB CAMERA)
Sub_max
Sub_zoom
Sub_min
TELEPHOTO
FIG. 13B
(SUB CAMERA)
WIDE ANGLE
SUB_MAX
SUB_ZOOM
SUB_ZOOM
SUB_MIN
TELEPHOTO
FIG. 13C
(SUB CAMERA)
WIDE ANGLE
SUB_MAX
SUB_ZOOM
SUB_ZOOM
SUB_MIN
TELEPHOTO

FIG. 14

START
ACQUIRE CONTROL DETAILS CORRESPONDING TO ROLE OF SUB CAMERA
S601
S602
IS TRACKING TARGET OF SUB CAMERA THE SAME AS TARGET SUBJECT OF MAIN CAMERA?
No
Yes
S603
S604
DETERMINE TO CONTROL IMAGE-CAPTURING DIRECTION OF SUB CAMERA SO AS TO TRACK TRACKING TARGET OF MAIN CAMERA
DETERMINE TO CONTROL IMAGE-CAPTURING DIRECTION OF SUB CAMERA SO AS TO TRACK SUBJECT DIFFERENT FROM TRACKING TARGET OF MAIN CAMERA
S605
IS SIZE CONTROL OF TRACKING TARGET OF SUB CAMERA IN PHASE WITH THAT OF MAIN CAMERA?
No
Yes
S606
S607
DETERMINE TO CONTROL ZOOM VALUE OF SUB CAMERA SUCH THAT SIZE CHANGES IN PHASE WITH THAT OF TRACKING TARGET OF MAIN CAMERA
DETERMINE TO CONTROL ZOOM VALUE OF SUB CAMERA SUCH THAT SIZE CHANGES IN OPPOSITE PHASE WITH THAT OF TRACKING TARGET OF MAIN CAMERA
END

FIG. 15A

SUBJECT A
SUBJECT B
SUBJECT C
500
400
MAIN CAMERA
SUB CAMERA
SUBJECT A
SUBJECT B
SUBJECT C
500
400
MAIN CAMERA
SUB CAMERA
SUBJECT A
SUBJECT B
SUBJECT C
500
400
MAIN CAMERA
SUB CAMERA
MAIN CAMERA
SUBJECT B
SUBJECT B
SUBJECT B
SUB CAMERA
SUBJECT B
SUBJECT B
SUBJECT B
TELEPHOTO END
INTERMEDIATE
WIDE-ANGLE END
TIME
MAIN CAMERA ZOOM STATE
SUB CAMERA ZOOM STATE

FIG. 15B
SUBJECT A
SUBJECT B
SUBJECT C
500
400
MAIN CAMERA
SUB CAMERA
TELEPHOTO END
INTERMEDIATE
WIDE-ANGLE END
TIME
MAIN CAMERA ZOOM STATE
SUB CAMERA ZOOM STATE

FIG. 16
SUBJECT A
SUBJECT B
SUBJECT C
500
400
MAIN CAMERA
SUB CAMERA
SUBJECT B
MAIN CAMERA
SUB CAMERA
TELEPHOTO END
INTERMEDIATE
WIDE-ANGLE END
TIME
MAIN CAMERA ZOOM STATE
SUB CAMERA ZOOM STATE

SUBJECT A
SUBJECT B
SUBJECT C
500
400
MAIN CAMERA
SUB CAMERA
MAIN CAMERA
SUB CAMERA
(TRACK SINGLE
SUBJECT)
SUB CAMERA
(TRACK INDIVIDUAL
SUBJECTS)

FIG. 17

FIG. 18

500
300
800
900
10'
MAIN CAMERA
BIRD'S-EYE CAMERA
SUB CAMERA A
SUB CAMERA B
700
100
600
IMAGE-CAPTURING CONTROL APPARATUS
ROLE CONTROL APPARATUS

FIG. 19

| ROLE | SUB CAMERA A | SUB CAMERA B |
|---|---|---|
| ASSIST FOLLOW | SUBJECT DIFFERENT FROM THAT OF MAIN | SUBJECT DIFFERENT FROM THAT OF MAIN |
| | SUBJECT ON THE LEFT AMONG TWO SUBJECTS | SUBJECT ON THE RIGHT AMONG TWO SUBJECTS |
| | FOCUS ON TRACKING TARGET | FOCUS ON TRACKING TARGET |

# FIG. 20A

SUBJECT A
SUBJECT B
SUBJECT C
20
800
500
900
SUB CAMERA A
MAIN CAMERA
SUB CAMERA B

# FIG. 20B

SUBJECT A
SUBJECT B
SUBJECT A
SUBJECT C
SUBJECT C
800
500
900
SUB CAMERA A
MAIN CAMERA
SUB CAMERA B

FIG. 21A

SUBJECT A
SUBJECT B
SUBJECT C
DISTANCE_SUB
DISTANCE_MAIN
500
400
MAIN CAMERA
SUB CAMERA

FIG. 21B

SUBJECT A
SUBJECT B
SUBJECT C
DISTANCE_MAIN
DISTANCE_SUB
500
400
MAIN CAMERA
SUB CAMERA

FIG. 22A

OPTICAL AXIS DIRECTION
TARGET SUBJECT (= SUBJECT A)
VIEW_MAIN
Θm
DISTANCE_MAIN
MAIN CAMERA

FIG. 22B

OPTICAL AXIS DIRECTION
TRACKING TARGET (= SUBJECT A)
VIEW_SUB
DISTANCE_SUB
θs
SUB CAMERA

Europäisches Patentamt
European Patent Office
Office européen des brevets

# EUROPEAN SEARCH REPORT

Application Number
EP 25 19 8509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/098358 A1 (WAKAMATSU NOBUSHIGE [JP]) 21 March 2024 (2024-03-21)<br>* abstract *<br>* figures 1-4, 6, 21 and 22 *<br>* paragraph [0081] - paragraph [0091] *<br>* paragraph [0194] - paragraph [0206] *<br>----- | 1-15 | INV.<br>H04N23/90<br>H04N23/69<br>H04N23/695<br>H04N23/61<br>H04N23/661<br>H04N23/58<br>G08B13/196 |
| A | US 2016/227128 A1 (UM GI MUN [KR] ET AL) 4 August 2016 (2016-08-04)<br>* abstract *<br>* figures 1-7 *<br>* paragraph [0041] - paragraph [0075] *<br>----- | 1-15 | |
| A | US 2012/154599 A1 (HUANG CHIEN-MIN [US]) 21 June 2012 (2012-06-21)<br>* abstract *<br>* figures 1-8 *<br>* paragraph [0050] - paragraph [0071] *<br>----- | 1-15 | |
| A | WO 2023/106107 A1 (NIKON CORP [JP]) 15 June 2023 (2023-06-15)<br>* abstract *<br>& US 2025/203199 A1 (TAKESHITA TETSUYA [JP] ET AL) 19 June 2025 (2025-06-19)<br>* abstract *<br>* figures 1-3 *<br>* paragraph [0080] - paragraph [0090] *<br>----- | 1-15 | TECHNICAL FIELDS SEARCHED (IPC)<br>H04N<br>G08B |

The present search report has been drawn up for all claims

1

| Place of search | Date of completion of the search | Examiner |
|---|---|---|
| Munich | 19 January 2026 | Elyamany, Noha |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 19 8509

This annex lists the patent family members relating to the patent documents cited in the above-mentioned European search report. The members are as contained in the European Patent Office EDP file on The European Patent Office is in no way liable for these particulars which are merely given for the purpose of information.

19-01-2026

| Patent document cited in search report | Publication date | Patent family member(s) | Publication date |
|---|---|---|---|
| US 2024098358 A1 | 21-03-2024 | US 2024098358 A1 | 21-03-2024 |
| | | WO 2020026903 A1 | 06-02-2020 |
| US 2016227128 A1 | 04-08-2016 | KR 20160093759 A | 09-08-2016 |
| | | US 2016227128 A1 | 04-08-2016 |
| US 2012154599 A1 | 21-06-2012 | AU 2011343674 A1 | 04-07-2013 |
| | | CN 103348673 A | 09-10-2013 |
| | | EP 2652948 A1 | 23-10-2013 |
| | | US 2012154599 A1 | 21-06-2012 |
| | | WO 2012083056 A1 | 21-06-2012 |
| WO 2023106107 A1 | 15-06-2023 | CN 118743236 A | 01-10-2024 |
| | | EP 4447474 A1 | 16-10-2024 |
| | | JP 7761060 B2 | 28-10-2025 |
| | | JP WO2023106107 A1 | 15-06-2023 |
| | | US 2025203199 A1 | 19-06-2025 |
| | | WO 2023106107 A1 | 15-06-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020025248 A